(19) Europäisches Patentamt / European Patent Office / Office européen des brevets

(11) **EP 3 536 666 B1**

(12) **EUROPÄISCHE PATENTSCHRIFT**

(45) Veröffentlichungstag und Bekanntmachung des Hinweises auf die Patenterteilung:
**07.12.2022  Patentblatt 2022/49**

(21) Anmeldenummer: **19164236.2**

(22) Anmeldetag: **11.10.2006**

(51) Internationale Patentklassifikation (IPC):
**C01B 39/00** *(2006.01)*    **C01B 37/02** *(2006.01)*

(52) Gemeinsame Patentklassifikation (CPC):
**C01B 37/02;** Y02P 20/582

(54) **SCHICHTSILIKAT UND GERÜSTSILIKAT**

SILICATE AND TECTOSILICATE

SILICATE ET TECTOSILICATE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.10.2005  DE 102005049362**

(43) Veröffentlichungstag der Anmeldung:
**11.09.2019  Patentblatt 2019/37**

(62) Dokumentnummer(n) der früheren Anmeldung(en) nach Art. 76 EPÜ:
**13158384.1 / 2 634 145**
**06794010.6 / 1 937 594**

(73) Patentinhaber:
• **BASF SE**
  **67056 Ludwigshafen am Rhein (DE)**
• **rubitec**
  **Gesellschaft für Innovation und Technologie der Ruhr-Universität Bochum mbH**
  **44801 Bochum (DE)**

(72) Erfinder:
• **Müller, Ulrich**
  **67056 Ludwigshafen am Rhein (DE)**
• **Ruetz, Roger**
  **68163 Mannheim (DE)**
• **Gies, Hermann**
  **44780 Bochum (DE)**

(74) Vertreter: **Altmann Stößel Dick Patentanwälte PartG mbB**
  **Isartorplatz 1**
  **80331 München (DE)**

(56) Entgegenhaltungen:
**WO-A1-2005/100242**

• **Y.X.WANG, H.GIES, B.MARLER, U.MUELLER: "Synthesis and Crystal Structure of Zeolite RUB-41 obtained as calcination product of layered Precursor: a Systematic Approach to a new synthesis route.", CHEM.MATER., Bd. 17, 15. Dezember 2004 (2004-12-15), Seiten 43-49, XP002429626, web**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die gemäß einem spezifischen Verfahren erhältlichen Schichtsilikate und Gerüstsilikate. Weiter betrifft die vorliegende Erfindung deren Verwendung, insbesondere deren Verwendung als Molekularsiebe zur Auf- und/oder Abtrennung von Stoffgemischen, insbesondere zur Auftrennung von Alkan- und/oder Alken-Gasgemischen.

In chemischen Produktions- oder Reinigungsverfahren stellt sich häufig die Aufgabe der Abtrennung mindestens eines Stoffes aus einem Stoffgemisch oder ganz allgemein der Auftrennung von Stoffgemischen. Grundsätzlich kann diese Auftrennung durch destillative Verfahren gelöst werden. Allerdings sind - insbesondere im Fall sehr eng siedender Gemische - diese destillativen Verfahren nicht oder nur unter Einsatz von Hilfsstoffen wirtschaftlich sinnvoll durchführbar. Ein Beispiel für die Auftrennung von eng siedenden Gemischen ist die Trennung von Alkanen oder Alkenen, wie beispielsweise die Auftrennung isomerer Alkane oder Alkene. geänderte Seite 1a Eine der der vorliegenden Erfindung zugrunde liegenden Aufgaben war es daher, neue Verbindungen mittels eines spezifischen Verfahrens bereitzustellen, die als Molekularsiebe und/oder Adsorptionsmittel für derartige Ab- und/oder Auftrennungen eingesetzt werden können.

Eine weitere, der vorliegenden Erfindung zugrunde liegende Aufgabe war es, neue Silikate, insbesondere Zeolithe, mittels eines spezifischen Verfahrens bereitzustellen, die zum einen für die oben beschriebenen Anwendungszwecke, ebenso aber auch für jeden weiteren denkbaren Zweck wie beispielsweise als Katalysatoren oder in anderen technischen Gebieten vorteilhaft eingesetzt werden können.

Demgemäß betrifft die vorliegende Erfindung ein Schichtsilikat, erhältlich durch ein umfassend

(1) Mischen von Siliciumdioxid und/oder eines Siliciumdioxid-Precursors mit einer wässrigen Lösung, enthaltend mindestens eine $R_1R_2R_3R_4N^+$ umfassende Tetraal-Y. X. Wang et al. offenbaren eine Synthese eines RUB-39 Zeolith insbesondere umfassend (1) Herstellen einer wässrigen Mischung von Dimethylpropylammoniumhydroxid und amorphem Silica, (2) Erhitzen der aus (1) erhaltenen Mischung in einem Autoklav bei einer Temperatur von 150 °C für 15 bis 45 Tage.

WO 2005/100242 A1 offenbart Schichtsilikate des Typs RUB-39 und Gerüstsilikate des Typs RUB-41, welche ohne Kristallisationshilfsmittel hergestellt wurden.

kylammoniumverbindung und mindestens eine Base, wobei $R_1$ und $R_2$ gleich Methyl und sowohl $R_3$ als auch $R_4$ gleich n-Propyl sind;

(2) Erwärmen der unter (1) erhaltenen kolloidalen Lösung auf eine Temperatur im Bereich von größer der unter dem gewählten Druck vorliegenden Siedetemperatur der kolloidalen Lösung bis 180 °C bei Normaldruck unter Erhalt einer mindestens ein Schichtsilikat enthaltenden Suspension, dadurch gekennzeichnet, dass als Kristallisationshilfsmittel in (1) das mindestens Silicium und Sauerstoff enthaltende geänderte Seiten 2a und 2b

Neben der mindestens einen $R_1R_2R_3R_4N^+$ umfassenden Tetraalkylammoniumverbindung kann erfindungsgemäß eine von dieser Verbindung verschiedene Base eingesetzt werden. Hierbei sind etwa Ammoniumhydroxid $NH_4OH$, Alkalihydroxide oder Erdalkalihydroxide wie etwa Natriumhydroxid oder Kaliumhydroxid oder Mischungen aus zwei oder mehr dieser Verbindungen zu nennen. In diesem Fall enthält die mindestens eine $R_1R_2R_3R_4N^+$ umfassende Tetraalkylammoniumverbindung ein oder mehrere geeignete Anionen wie beispielsweise Halogenanionen wie beispielsweise Fluorid oder Chlorid oder Bromid oder Iodid.

Gemäß einer bevorzugten Ausführungsform enthält die mindestens eine $R_1R_2R_3R_4N^+$ umfassende Tetraalkylammoniumverbindung auch die gemäß (1) eingesetzte Base als Anion. Als basische Anionen sind diesbezüglich unter anderem das Hydroxidion oder Aluminate zu nennen. Als basisches Anion ist das Hydroxidion besonders bevorzugt.

Demgemäß betrifft die vorliegende Erfindung auch ein wie oben beschriebenes Schichtsilikat das mittels eines spezifischen Verfahrens hergestellt wird, das dadurch gekennzeichnet ist, dass die mindestens eine $R_1R_2R_3R_4N^+$ umfassende Tetraalkylammoniumverbindung ein basisches Anion, bevorzugt ein Hydroxidion, enthält.

Ebenso betrifft die vorliegende Erfindung daher auch ein wie oben beschriebenes Schichtsilikat dass mittels eines spezfischen Verfahrens hergestellt wird, das dadurch gekennzeichnet ist, dass die gemäß. (1) eingesetzte wässrige Lösung Dimethyldipropylammoniumhydroxid (DMDPAH) enthält.

Die molaren Verhältnisse von Siliciumdioxid und/oder aus der Precursorverbindung resultierendem Siliciumdioxid, Tetraalkylammonium-Verbindung, insbesondere Tetraalkylammoniumhydroxid-Verbindung, und Wasser können im Wesentlichen beliebig eingestellt werden, solange gewährleistet ist, dass gemäß (2) mindestens ein Silikat durch Kristallisation erhalten wird.

, nach der Abtrennung aus der gemäß (2) erhaltenen Suspension resultierende Schichtsilikat zugegeben wird, wobei die gemäß (1) erhaltene kolloidale Lösung gemäß (2) für einen Zeitraum im Bereich von 12 h bis 260 h erwärmt wird, und wobei das Schichtsilikat mindestens die folgenden Reflexe enthält:

| Intensität (%) | Beugungswinkel 2θ / ° [Cu K(alpha 1)] |
|---|---|
| 100 | 8,0 - 8,4 |
| 11 - 21 | 11,0-11,4 |
| 13 - 23 | 13,2 - 13,6 |
| 5 - 15 | 18,0 - 18,4 |
| 7 - 17 | 18,4 - 18,8 |
| 19 - 29 | 19,9 - 20,0 |

wobei sich die Angabe 100 % auf die Intensität des höchsten Peaks im Röntgendiffraktogramm bezieht.

Weiter betrifft die vorliegende Erfindung ein Gerüstsilikat erhältlich durch ein Verfahren umfassend

(1) Mischen von Siliciumdioxid und/oder eines Siliciumdioxid-Precursors mit einer wässrigen Lösung, enthaltend mindestens eine $R_1R_2R_3R_4N^+$ umfassende Tetraalkylammoniumverbindung und mindestens eine Base, wobei $R_1$ und $R_2$ gleich Methyl und sowohl $R_3$ als auch $R_4$ gleich n-Propyl sind;

(2) Erwärmen der unter (1) erhaltenen kolloidalen Lösung auf eine Temperatur im Bereich von grösser der unter dem gewählten Druck vorliegenden Siedetemperatur der kolloidalen Lösung bis 180 °C bei Normaldruck unter Erhalt einer mindestens ein Schichtsilikat enthaltenden Suspension,

dadurch gekennzeichnet, dass als Kristallisationshilfsmittel in (1) das mindestens Silicium und Sauerstoff enthaltende, nach der Abtrennung aus der gemäß (2) erhaltenen Suspension resultierende Schichtsilikat zugegeben wird, wobei die gemäß (1) erhaltene kolloidale Lösung gemäß (2) für einen Zeitraum im Bereich von 12 h bis 260 h erwärmt wird, und zusätzlich umfassend

(6) Calcinieren des gemäß (2) erhaltenen Schichtsilikates unter Erhalt eines Gerüstsilikates, wobei das Gerüstsilikat mindestens die folgenden Reflexe enthält:

| Intensität (%) | Beugungswinkel 2θ / ° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 12-22 | 19,6-19,8 |

wobei sich die Angabe 100 % auf die Intensität des höchsten Peaks im Röntgendiffraktogramm bezieht.

Gemäß einer bevorzugten Ausführungsform werden die Mengen an eingesetztem Siliciumdioxid und/oder aus Precursor resultierendem Siliciumdioxid, Tetraalkylammoniumhydroxid-Verbindung und Wasser so gewählt, dass die gemäß (1) erhaltene kolloidale Lösung Siliciumdioxid, Tetraalkylammoniumhydroxid-Verbindung und Wasser in Gewichtsverhältnissen im Bereich von 1 : (0,4-10) : (4-12) enthält. Weiterhin sind hinsichtlich der oben genannten Bereiche Wassergehalte bis hin zu 15 möglich, wobei als untere Grenze beispielsweise 3 zu nennen ist. Demgemäß kann die gemäß (1) erhaltene kolloidale Lösung Siliciumdioxid, Tetraalkylammoniumhydroxid-Verbindung und Wasser in Gewichtsverhältnissen im Bereich von 1 : (0,4-10) : (3-15) enthalten. Weiter kann erfindungsgemäß der Wassergehalt im Bereich von 4 bis 15 oder von 5 bis 15 oder von 6 bis 15 oder von 7 bis 15 oder von 8 bis 15 oder von 9 bis 15 oder von 10 bis 15 oder von 11 bis 15 oder von 12 bis 15 oder von 13 bis 15 oder von 14 bis 15 oder von 3 bis 14 oder von 3 bis 13 oder von 3 bis 12 oder von 3 bis 11 oder von 3 bis 10 oder von 3 bis 9 oder von 3 bis 8 oder von 3 bis 7 oder von 3 bis 6 oder von 3 bis 5 oder von 3 bis 4 liegen. Weiter bevorzugte Bereiche sind beispielsweise von 4 bis 14,5 oder von 5 bis 14 oder von 6 bis 13,5 oder von 7 bis 13 oder von 7,5 bis 12,5. Der Gehalt an Tetraalkylammoniumhydroxid-Verbindung kann erfindungsgemäß beispielsweise im Bereich von 0,5 bis 9 oder von 0,6 bis 8 oder von 0,7 bis 7 oder von 0,8 bis 6 oder von 0,9 bis 5 oder von 1,0 bis 4 oder von 1,1 bis 3 oder von 1,2 bis 2 liegen.

Gemäß einer besonders bevorzugten Ausführungsform der vorliegenden Erfindung enthält die gemäß (1) erhaltene kolloidale Lösung $SiO_2$, DMDPAH und Wasser in den Gewichtsverhältnissen $SiO_2$ : DMDPAH : Wasser gleich 1 : (0,4-2) : (4-8), weiter bevorzugt gleich 1 : (0,5-1,9) : (4-8), weiter bevorzugt gleich 1 : (0,6-1,8) : (4-8), weiter bevorzugt gleich 1 : (0,7-1,7) : (4-8), weiter bevorzugt gleich 1 : (0,8-1,6) : (4-8), weiter bevorzugt gleich 1 : (0,9-1,5): (4-8), weiter bevorzugt gleich 1 : (1,0-1,4): (4-8), weiter bevorzugt gleich 1 : (1,1-1,3) : (4-8), wobei der Wasseranteil jeweils weiter bevorzugt im Bereich von 5 bis 7 liegt.

Gemäß einer weiteren Ausführungsform der vorliegenden Erfindung enthält die gemäß (1) erhaltene kolloidale Lösung $SiO_2$, DMDPAH und Wasser in den Gewichtsverhältnissen $SiO_2$ : DMDPAH : Wasser von 1 : (0,45-0,55) : (8-12), weiter bevorzugt von 1 : (0,46-0,54) : (8-12), weiter bevorzugt von 1 : (0,47-0,53) : (8-12), weiter bevorzugt von 1 : (0,48-0,52) : (8-12) und insbesondere bevorzugt von 1 : (0,49-0,51) : (8-12). Dabei liegt der Wassergehalt jeweils weiter bevorzugt im Bereich von 8 bis 11 oder von 8 bis 10 oder von 8 bis 9 oder von 9 bis 12 oder von 9 bis 11 oder von 9 bis 10 oder von 10 bis 12 oder von 10 bis 11 oder von 11 bis 12.

Die vorliegende Erfindung betrifft daher auch die Verwendung von Dimethyldipropyl-ammoniumhydroxid, bevorzugt als strukturbildendes Mittel, bei der Synthese eines Schichtsilikats oder Gerüstsilikats , bevorzugt der hydrothermalen Synthese eines , wobei das Gerüstsilikat weiter bevorzugt ein Silikat von Zeolith-Typ ist.

Das erfindungsgemäß erhaltene Schichtsilikat, wie bereits beschrieben, zeichnet sich dadurch aus, dass im entsprechenden Röntgenbeugungsmuster durch Cu K alpha 1-Strahlung mindestens die folgenden Reflexe auftreten:

| Intensität (%) | Beugungswinkel 2 θ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19 - 29 | 19,9 - 20,0 |

wobei sich die Angabe 100 % auf die Intensität des höchsten Peaks im Röntgendiffraktogramm bezieht.

Das erfindungsgemäß erhaltene Gerüstsilikat, wie bereits beschrieben, zeichnet sich dadurch aus, dass im entsprechenden Röntgenbeugungsmuster durch Cu K alpha 1-Strahlung mindestens die folgenden Reflexe auftreten:

| Intensität / % | Beugungswinkel 2θ / ° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |

wobei sich die Angabe 100 % auf die Intensität des höchsten Peaks im Röntgendiffraktogramm bezieht.

Überraschend wurde gefunden, dass es für den Herstellungsprozess des Schicht- oder Gerüstsilikats von Vorteil ist, wenn in (1) als Kristallisationshilfsmittel das Schichtsilikat Silikat zugegeben wird, das aus dem spezifischen Verfahren zur Herstellung erfindungsgemäßer Schicht- oder Gerüstsilikate Verfahren resultiert.

Dabei wird das wie oben erwähnte und unten im Detail beschriebene Schichtsilikat als Kristallisationshilfsmittel eingesetzt. Gemäß des spezifischen Verfahrens zur Herstellung erfindungsgemäßer Schicht- oder Gerüstsilikate Verfahrens wird hierbei als Kristallisationshilfsmittel dasjenige Schichtsilikat eingesetzt, das nach Abtrennung aus der gemäß (2) erhaltenen Suspension resultiert, wobei mögliche Abtrennverfahren als Schritt (3) unten im Detail beschrieben sind. Vor dem Einsatz als Kristallisationshilfsmittel in (1) kann das nach Abtrennung aus der gemäß (2) erhaltenen Suspension resultierende Schichtsilikat zusätzlich entweder gemäß (4) geeignet gewaschen und/oder gemäß (5) geeignet getrocknet werden, wobei (4) und (5) unten im Detail beschrieben sind. Gemäß einer weiteren Ausführungsform des spezifischen Verfahrens zur Herstellung erfindungsgemäßer Schicht- und Gerüstsilikate ist es auch möglich, die aus (2) erhaltene Suspension zumindest teilweise ohne Abtrennung des in der Suspension enthaltenen Schichtsilikats als Kristallisationshilfsmittel einzusetzen.

Zum anderen ist es im Rahmen der vorliegenden Erfindung möglich, das wie oben erwähnte und unten im Detail beschriebene Gerüstsilikat in (1) als Kristallisationshilfsmittel einzusetzen. Wie unten im Detail beschrieben, kann das Gerüstsilikat bevorzugt dadurch hergestellt werden, dass das gemäß (2) erhaltene und

- gegebenenfalls gemäß (3) abgetrennte und
- gegebenenfalls gemäß (4) gewaschene und/oder gemäß (5) getrocknete Schichtsilikat

in geeigneter Weise calciniert wird.

Gemäß einer weiteren Ausführungsform des spezifischen Verfahrens zur Herstellung erfindugsgemäßer Schicht- oder Gerüstsilikate kann als Kristallisationshilfsmittel auch eine Mischung aus Schichtsilikat und Gerüstsilikat eingesetzt werden.

Besonders bevorzugt wird als Kristallisationshilfsmittel das gemäß (2) erhaltene und gegebenenfalls gemäß (3) abgetrennte und gegebenenfalls gemäß (4) gewaschene und/oder gemäß (5) getrocknete Schichtsilikat eingesetzt.

Bevorzugt wird das Schichtsilikat mittels des specifischen Verfahrens zur Herstellung erfindrungsgemäßer Schicht- oder Gerüstsilikate in einem Batch- Verfahren hegestellt. Wenn im Rahmen der vorliegenden Erfindung davon gesprochen wird, dass das gemäß (2) erhaltene Schichtsilikat eingesetzt wird, sind davon Ausführungsformen umfasst, gemäß denen das Schichtsilikat hergestellt wird und ein Teil davon in einem folgenden Reaktionsansatz im gleichen Batchreaktor als Kristallisationshilfsmittel eingesetzt wird. Ebenso ist es möglich, das Schichtsilikat zumindest teilweise in eine Stufe (1) einzusetzen, die in einem anderen Batchreaktor durchgeführt wird als die Stufe (1), aus der das Schichtsilikat letztlich erhalten wurde.

Überraschenderweise wurde für das spezifische Verfahren zur Herstellung erfindungsgemäßer Schicht- und Gerüstsilikate gefunden, dass sich der Zusatz von Schichtsilikat oder von Schichtsilikat Gerüstsilikat als Kristallisationshilfsmittel günstig die auf Induktionsphase der hydrothermalen Silikatsynthese auswirkt und so eine Beschleunigung der Kristallisation erreicht wird.

Bevorzugt wird in (1) das Schichtsilikat, bezogen auf in der Mischung gemäß (1) enthaltenes Siliciumdioxid und/oder auf in der Mischung gemäß (1) im Siliciumdioxid-Precursor enthaltenes Siliciumdioxid, in einer Menge von 0,1 bis 5 Gew.-% zugegeben.

Weiter bevorzugt wird das Schichtsilikat in (1) in einer Menge von 0,2 bis 4,5 Gew.-%, weiter bevorzugt von 0,5 bis 4,0 Gew.-%, weiter bevorzugt von 0,75 bis 3,5 Gew.-%, weiter bevorzugt von 1,0 bis 3,0 Gew.-%, weiter bevorzugt von 1,5 bis 2,5 Gew.-%, zugegeben.

Gemäß einer bevorzugten Ausführungsform wird das Schichtsilikat als Kristallisationshilfsmittel der Mischung zugegeben, die durch Mischen von Siliciumdioxid und/oder Siliciumdioxid-Precursor entsteht.

Die gemäß (1) derart erhaltene kolloidale Lösung kann gemäß einer möglichen Ausführungsform der vorliegenden Erfindung ohne weiteren Zwischenschritt gemäß (2) erwärmt werden. Ebenso ist es möglich, falls erforderlich, die gemäß (1) derart erhaltene kolloidale Lösung vor dem Erwärmen gemäß (2) in geeigneter Weise für einen Zeitraum von beispielsweise bis zu 12 h, bevorzugt von 0,5 bis 6 h und besonders bevorzugt von 1 bis 3 h zu rühren.

Gemäß einer weiteren Ausführungsform kann die gemäß (1) erhaltene und gegebenenfalls gerührte kolloidale Lösung vor dem Erwärmen gemäß (2) in geeigneter Weise aufkonzentriert werden. Dieses Aufkonzentrieren ist unten als Schritt (ii) beschrieben.

Grundsätzlich ist es möglich, die gemäß (1) erhaltene, gegebenenfalls geeignet gerührte und/oder gegebenenfalls geeignet aufkonzentrierte kolloidale Lösung gemäß (2) unter jedem geeigneten Druck bei jeder geeigneten Temperatur zu erwärmen, solange gewährleistet ist, dass in der kolloidalen Lösung mindestens ein Schicht- oder Gerüstsilikat kristallisiert. Bevorzugt sind hierbei Temperaturen, die bei dem gewählten Druck oberhalb des Siedepunktes der gemäß (1) erhaltenen Lösung liegen. Weiter bevorzugt sind Temperaturen bis zu 180 °C bei Normaldruck. Gemäß einer besonders bevorzugten Ausführungsform des erfindungsgemäßen Verfahrens wird die Kristallisation gemäß (2) in einem Autoklaven durchgeführt.

Demgemäß betrifft die vorliegende Erfindung auch ein wie oben beschriebenes Schichtsilikat, das durch ein spezifisches Verfahren hergestellt wird, das dadurch gekennzeichnet ist, dass die hydrothermale Kristallisation in (2) in einem Autoklaven durchgeführt wird.

Der Begriff "Normaldruck", wie er im Rahmen der vorliegenden Erfindung verwendet wird, bezeichnet einen Druck von idealer Weise 101.325 Pa, der jedoch innerhalb der dem Fachmann bekannten Grenzen Schwankungen unterworfen sein kann. Beispielsweise kann der Druck im Bereich von 95.000 bis 106.000 oder von 96.000 bis 105.000 oder 97.000 bis 104.000 oder von 98.000 bis 103.000 oder 99.000 bis 102.000 Pa liegen.

Bevorzugt liegt die gemäß (2) verwendete Temperatur im Autoklaven im Bereich von 100 bis 180 °C, weiter bevorzugt im Bereich von 110 bis 175 °C, weiter bevorzugt im Bereich von 120 bis 170 °C, weiter bevorzugt im Bereich von 130 bis 165 °C und insbesondere bevorzugt im Bereich von 140 bis 160 °C.

Demgemäß betrifft die vorliegende Erfindung auch ein wie oben beschriebenes Schichtsilikat, das durch ein spezifisches Verfahren hergestellt wird, das dadurch gekennzeichnet ist, dass die gemäß (1) erhaltene kolloidale Lösung, gegebenenfalls nach Aufkonzentrieren wie oben beschrieben, gemäß (2) im Autoklaven auf eine Temperatur im Bereich von 100 bis 180 °C erwärmt wird.

Diese Temperatur, auf die die gemäß (1) erhaltene kolloidale Lösung gemäß (2) erwärmt wird, kann grundsätzlich solange gehalten werden, bis die Kristallisation im erwünschten Umfang erfolgt ist. Bevorzugt sind hierbei Zeiten von 24 h bis 252 h, weiter bevorzugt von 24 bis 252 h, weiter bevorzugt von 24 bis 240 h, weiter bevorzugt von 24 bis 216 h, weiter bevorzugt von 24 bis 192 h, weiter bevorzugt von 24 bis 168 h, weiter bevorzugt von 24 bis 144 h, weiter bevorzugt von 24 bis 120 h, weiter bevorzugt von 48 bis 120 h und weiter bevorzugt von 72 bis 120 h.

Im Vergleich zu einem Verfahren, in dem kein Schichtsilikat als Kristallisationshilfsmittel in (1) zugesetzt wurde und für das Kristallisationszeiten von etwa 15 bis 45 d typisch sind, konnte durch das erfindungsgemäße Verfahren eine deutliche Verkürzung der Kristallisationszeit auf weniger als 15 Tage, beispielsweise auf 11 d oder sogar bis auf 5 Tage oder weniger erreicht werden.

Demgemäß betrifft die vorliegende Erfindung ein wie oben beschriebenes Schichtsilikat, das durch ein spezifisches Verfahren hergestellt wird, das dadurch gekennzeichnet ist, dass die gemäß (1) erhaltene kolloidale Lösung, gegebenenfalls nach Aufkonzentrieren wie oben beschrieben, gemäß (2) für einen Zeitraum im Bereich von 12 h bis 260 h erwärmt wird.

Als Siliciumdioxid oder Precursor davon kann grundsätzlich jede geeignete Verbindung eingesetzt werden. In diesem Zusammenhang können sowohl kolloidales Siliciumdioxid als auch so genanntes "wet process"-Siliciumdioxid als auch so genanntes "dry process"-Siliciumdioxid eingesetzt werden. In diesen Fällen handelt es sich ganz besonders bevorzugt um amorphes Siliciumdioxid, wobei die Größe der Siliciumdioxidpartikel beispielsweise im Bereich von 5 bis 100 nm liegt und die Oberfläche der Siliciumdioxidpartikel im Bereich von 50 bis 500 m$^2$/g liegt. Kolloidales Siliciumdioxid ist unter anderem etwa kommerziell erhältlich als Ludox®, Syton®, Nalco® oder Snowtex®. "Wet process"-Siliciumdioxid ist unter anderem etwa kommerziell erhältlich als Hi-Sil®, Ultrasil®, Vulcasil®, Santocel®, Valron-Estersil®, Tokusil® oder Nipsil®. "Dry process"-Siliciumdioxid ist unter anderem etwa kommerziell erhältlich als Aerosil®, Reolosil®, Cab-O-Sil®, Fransil® oder ArcSilica®. Als Precursor-Verbindung sind beispielsweise Tetraalkoxysilane wie etwa Tetraethoxysilan oder Tetrapropoxysilan zu nennen. Besonders bevorzugt wird im erfindungsgemäßen Verfahren kein Siliciumdioxid-Precursor, sondern Siliciumdioxid als solches eingesetzt. Wiederum bevorzugt ist dabei amorphes Siliciumdioxid.

Demgemäß betrifft die vorliegende Erfindung auch ein wie oben beschriebenes Schichtsilikat, das durch ein spezifisches Verfahren hergestellt wird, das dadurch gekennzeichnet ist, dass gemäß (1) amorphes Siliciumdioxid eingesetzt wird.

Hierbei kann grundsätzlich jedes geeignete amorphe Siliciumdioxid verwendet werden. Bevorzugt wird amorphes Siliciumdioxid mit einer spezifischen Oberfläche (BET, Brunauer - Emmet - Teller; bestimmt gemäß DIN 66131 durch Stickstoffadsorption bei 77 K) im Bereich von 10 bis 400 m$^2$/g, bevorzugt im Bereich von 10 bis 100 m$^2$/g und besonders bevorzugt im Bereich von 10 bis 50 m$^2$/g. Weitere bevorzugte Bereiche sind 50 bis 100 m$^2$/g oder 100 bis 300 m$^2$/g oder 300 bis 400 m$^2$/g.

Gemäß (1) wird zusätzlich zu Siliciumdioxid ganz besonders bevorzugt DMDPAH eingesetzt.

Diese Verbindung kann nach jedem denkbaren Verfahren hergestellt werden. Eine Möglichkeit zur Herstellung ist beispielsweise eine elektrochemische Dialyse mittels einer Membran. Gemäß einer Ausführungsform des erfindungsgemäßen Verfahrens wird DMDPAH durch Umsetzung von Dipropylamin und Methyliodid und anschließenden Anionenaustausch erhalten.

Gemäß einer weiteren Ausführungsform werden Dipropylamin und Methyliodid in einem geeigneten Lösungsmittel oder Lösungsmittelgemisch, bevorzugt in Ethanol miteinander umgesetzt. Die Temperatur, bei der diese Umsetzung erfolgt, liegt bevorzugt im Bereich von 20 bis 75 °C, weiter bevorzugt im Bereich von 30 bis 60 °C und insbesondere bevorzugt im Bereich von 40 bis 50 °C.

Gemäß einer weiteren Ausführungsform kann im Verfahren zur Herstellung erfindungsgemäßer Schicht- oder Gerüstsilikate DMDPAH ausgehend von Dimethylamin und Propylbromid in einem geeigneten Lösungsmittel, beispielsweise bevorzugt Ethanol, bei einer geeigneten Temperatur, beispielsweise bevorzugt von 40 bis 50 °C, hergestellt werden.

Der erfindungsgemäße Anionenaustausch erfolgt bevorzugt nach Abtrennung wie etwa durch Filtrieren, Zentrifugieren oder ein anderes Fest-Flüssig-Trennverfahren, beispielsweise bevorzugt durch Filtration, und Waschen des jeweiligen Ammoniumhydroxides, beispielsweise bevorzugt mit einem geeigneten Alkohol wie beispielsweise Ethanol, durch ein geeignetes Ionenaustauscherharz wie beispielsweise ein Amber-lyst™-Harz oder ein Harz vom Typ AG1-X8 (BioRad). Möglich ist auch Ionenaustausch unter Verwendung von Ag$_2$O.

Ebenso kann im Verfahren zur Herstellung erfindungsgemäßer Schicht- oder Gerüstsilikate kommerziell erhältliches DMDPAH verwendet werden wie beispielsweise eine wässrige DMDPAH-Lösung der Firma Sachem.

DMDPAH wird in (1) bevorzugt als Lösung, insbesondere bevorzugt als wässrige Lösung eingesetzt, wobei die Konzentration der wässrigen Lösung bezüglich DMDPAH beispielsweise im Bereich von 10 bis 20 Gew.-% liegt.

Die Temperatur bei der Herstellung der kolloidalen Lösung gemäß (1) liegt bevorzugt im Bereich von 10 bis 40 °C, weiter bevorzugt im Bereich von 15 bis 35 °C und insbesondere bevorzugt im Bereich von 20 bis 30 °C.

Gemäß einer Ausführungsform wird im Verfahren zur Herstellung erfindungsgemäßer Schicht- oder Gerüstsilikate zunächst in einem ersten Schritt eine kolloidale Lösung hergestellt, die Tetraalkylammoniumhydroxid, Siliciumdioxid, Wasser und Kristallisationshilfsmittel enthält. In mindestens einem zweiten Schritt wird anschließend der Wassergehalt der in dem ersten Schritt erhaltenen Lösung mittels eines geeigneten Verfahrens so eingestellt, dass er in den oben angegebenen bevorzugten Grenzen liegt.

Als unter anderem bevorzugtes geeignetes Verfahren wird der Wassergehalt durch Wasserentfernung in mindestens einer geeigneten Vorrichtung eingestellt. Dabei wird das Wasser bei einer Temperatur im Bereich von bevorzugt 60 bis 85 °C, weiter bevorzugt von 65 bis 80 °C und insbesondere bevorzugt von 65 bis 75 °C entfernt. Dieser Schritt ist oben als Aufkonzentrierung beschrieben.

Demgemäß betrifft die vorliegende Erfindung auch wie oben beschriebene Verfahren zur Herstellung erfindungsgemäßer Schicht- oder Gerüstsilikate, die dadurch gekennzeichnet sind , dass gemäß (1)

(i) eine kolloidale Lösung hergestellt wird, die Tetraalkylammoniumhydroxid (DMDPAH), Siliciumdioxid, Wasser und Schichtsilikat als Kristallisationshilfsmittel enthält, und
(ii) der Wassergehalt der gemäß (i) erhaltenen kolloidalen Lösung so eingestellt wird, dass eine kolloidale Lösung erhalten wird, die Tetraalkylammoniumhydroxid, Siliciumdioxid, Wasser und Schichtsilikat als Kristallisationshilfsmittel mit einem Gewichtsverhältnis $SiO_2$ : Tetraalkylammoniumhydroxid : Wasser : Schichtsilikat in den oben angegebenen bevorzugten Bereichen wie beispielsweise 1 : (0,4-2) : (4-8) : (0,001 - 0,05), enthält.

Als mindestens eine geeignete Vorrichtung seien unter anderem Rotationsverdampfer oder Öfen genannt. Besonders bevorzugt ist ein Ofen. Bevorzugt sind diesbezüglich unter anderem Vorrichtungen, die eine Wasserentfernung bei vermindertem Druck und damit bei niedrigen Temperaturen erlauben, wie beispielsweise unter Vakuum betrieben Rotationsverdampfer. Schicht- oder

Das Erwärmen und die anschließende Herstellung des mindestens einen Schicht- oder Gerüstsilikats kann in jeder geeigneten Vorrichtung durchgeführt werden. Beispielsweise erfolgt (2) in einem Autoklaven.

Die kolloidale Lösung wird zur Kristallisation gemäß (2) vorzugsweise geeignet gerührt. Ebenso ist es möglich, das Reaktionsgefäß, in dem die Kristallisation durchgeführt wird, zu rotieren.

Aus der aus (2) erhaltenen Suspension wird das mindestens eine erhndungsgemäße Schicht- oder Gerüstsilikat gemäß einer Ausführungsform des Verfahrens in mindestens einem Schritt geeignet abgetrennt. Diese Abtrennung kann beispielsweise über Filtrations-, Ultrafiltrations-, Diafiltrations-, Zentrifugierverfahren oder etwa Sprühtrocknungs- und Sprühgranulierverfahren erfolgen. Bevorzugt ist die Abtrennung über Sprühtrocknung oder Filtration. Dabei kann die Abtrennung beispielsweise über Sprühverfahren ausgehen von der gemäß (2) erhaltenen Suspension als solcher oder von einer Suspension, die aus einem Aufkonzentrieren der gemäß (2) erhaltenen Suspension resultiert. Dieses Aufkonzentrieren kann beispielsweise durch Eindampfen, wie beispielsweise Eindampfen unter vermindertem Druck, oder durch Cross-Flow-Filtration erfolgen. Ebenso ist es möglich, die gemäß (2) erhaltene Suspension dadurch aufzukonzentrieren, dass die gemäß (2) erhaltene Suspension geteilt wird und der in einem der beiden Teile vorhandene Feststoff durch beispielsweise Filtrations-, Ultrafiltrations-, Diafiltrations- oder Zentrifugierverfahren abgetrennt wird und nach einem möglichen Wasch- und/oder Trocknungsschritt im anderen Teil der Suspension suspendiert wird. Das über die Abtrenn- und Trocknungsverfahren der Sprühtrocknung und Sprühgranulationstrocknung wie beispielsweise der Wirbelschichtsprühgranulationstrocknung erhaltene Sprühgut kann dabei Voll- und/oder Hohlkugeln enthalten bzw. im wesnetlichen aus solchen Kugeln bestehen, die beispielsweise einen Durchmesser im Bereich von 5 bis 500 μm oder auch 5 bis 300 μm aufweisen können. Als Zerstäuberdüsen beim Versprühen können beispielsweise Ein- oder Mehrstoffdüsen verwendet werden. Denkbar ist auch der Einsatz eines Rotationszerstäubers. Mögliche Eintrittstemperaturen des verwendeten Trägergases liegen beispielsweise im Bereich von 200 bis 600 °C, bevorzugt im Bereich von 225 bis 550 °C und weiter bevorzugt im Bereich von 300 bis 500 °C. Die Austrittstemperatur des Trägergases liegt beispielsweise im Bereich von 50 bis 200 °C. Als Trägergase sind beispielsweise Luft, Magerluft, oder Sauerstoff-Stickstoffgemische mit einem Sauerstoffanteil von bis zu 10 Vol.-%, bevorzugt von bis zu 5 Vol.-%, weiter bevorzugt von weniger als 5 Vol.-% wie beispielsweise von bis zu 2 Vol.-% zu nennen. Die Sprühverfahren können im Gegenstrom oder im Gleichstrom durchgeführt werden.

Demgemäß betrifft die vorliegende Erfindung auch ein wie oben beschriebenes Schicht- oder Gerüstsilikat, wobei das Herstellungsverfahren zusätzlich umfasst (3) Abtrennung des mindestens einen Silikats aus der gemäß (2) erhaltenen Suspension.

Gemäß einer Ausführungsform des zur Herstellung eines Verfahrens erfindungsgemäßen Schicht- oder Gerüstsilikats kann die Kristallisation gemäß (2) durch geeignetes Quenchen abgebrochen werden. Hierbei ist es besonders bevorzugt, die Suspension mit Wasser zu versetzen, das eine Temperatur aufweist, die zum Abbruch der Kristallisation geeignet ist.

Das wie oben beschrieben abgetrennte mindestens einel Schicht- oder Gerüstsilikat wird gemäß einer bevorzugten Ausführungsform des Verfahrens gewaschen und/oder getrocknet.

Demgemäß betrifft die vorliegende Erfindung auch das wie oben beschriebenes Schicht- oder Gerüstsilikat, wobei das Herstellungsverfahren zusätzlich umfasst (4) Waschen
und/oder (5) Trocknen des gemäß (3) erhaltenen Schicht- Gerüstsilikats. << beschriebene Schicht- oder Gerüstsilikat, wobei das Herstellungsverfahren zusätzlich umfasst >>

Dabei kann sich an die Abtrennung mindestens ein Waschschritt und/oder mindestens ein Trocknungsschritt anschließen, wobei bei mindestens zwei Waschschritten gleiche oder verschiedene Waschmittel oder Waschmittelgemische und bei mindestens zwei Trocknungsschritten gleiche oder verschiedene Trocknungstemperaturen verwendet werden können.

Die Trocknungstemperaturen liegen hierbei bevorzugt im Bereich von Raumtemperatur bis 150 °C, weiter bevorzugt von 60 bis 140 °C, weiter bevorzugt von 80 bis 130 °C und weiter bevorzugt im Bereich von 100 bis 120 °C.

Die Trocknungsdauern liegen bevorzugt im Bereich von 6 bis 48 h, weiter bevorzugt von 12 bis 36 h.

Demgemäß betrifft die vorliegende Erfindung auch das wie oben beschriebene Schicht- oder Gerüstsilikat , wobei das Schicht- oder Gerüstsilikat gemäß (4) mit Wasser gewaschen und/oder gemäß (5) bei einer Temperatur im Bereich von Raumtemperatur bis 150 °C getrocknet wird.

Als Waschmittel können beispielsweise Wasser, Alkohole wie beispielsweise Methanol, Ethanol oder Propanol, oder Gemische aus zwei oder mehr davon eingesetzt werden. Als Mischungen seien beispielsweise Mischungen aus zwei oder mehr Alkoholen wie beispielsweise Methanol und Ethanol oder Methanol und Propanol oder Ethanol und Propanol oder Methanol und Ethanol und Propanol, oder Mischungen aus Wasser und mindestens einem Alkohol wie beispielsweise Wasser und Methanol oder Wasser und Ethanol oder Wasser und Propanol oder Wasser und Methanol und Ethanol oder Wasser und Methanol und Propanol oder Wasser und Ethanol und Propanol oder Wasser und Methanol und Ethanol und Propanol genannt. Bevorzugt sind Wasser oder eine Mischung aus Wasser und mindestens einem Alkohol, bevorzugt Wasser und Ethanol, wobei Wasser als alleiniges Waschmittel ganz besonders bevorzugt ist.

Gemäß einer Ausführungsform des Verfahrens zur Herstellung eines erfindungsgemäßen Schicht- oder Gerüstsilikats kann die Mutterlauge, die aus der Abtrennung des mindestens einen Schicht- oder Gerüstsilikats gemäß (3) erhalten wird und die gegebenenfalls nicht umgesetzte Edukte enthält, in den Schritt (1) des Verfahrens zurückgeführt werden.

Die oben beschriebene Abtrennung beispielsweise durch ein Sprühtrocknungs- oder Sprühgranulierverfahren hat den Vorteil, dass die Abtrennung des Schicht- oder Gerüstsilikats aus der gemäß (2) erhaltenen Suspension und die Trocknung des Schicht- oder Gerüstsilikats in einem einzigen Schritt durchgeführt werden können.

Wie bereits beschrieben, betrifft die vorliegende Erfindung ein Schichtsilikat, das dadurch gekennzeichnet ist, dass im Röntgenbeugungsmuster durch Cu K alpha 1-Strahlung mindestens die folgenden Reflexe auftreten (Struktur RUB-39):

| Intensität (%) | Beugungswinkel $2\theta$ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5-15 | 18,0 - 18,4 |
| 7 - 17 | 18,4 - 18,8 |
| 19-29 | 19,9 - 20,0 |

wobei sich die Angabe 100 % auf die Intensität des höchsten Peaks im Röntgendiffraktogramm bezieht.

Bevorzugt betrifft die vorliegende Erfindung ein Schichtsilikat, das dadurch gekennzeichnet ist, dass im Röntgenbeugungsmuster durch Cu K alpha 1-Strahlung mindestens die folgenden Reflexe auftreten (Struktur RUB-39):

| Intensität (%) | Beugungswinkel $2\theta$ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5-15 | 18,0 - 18,4 |
| 7 - 17 | 18,4 - 18,8 |
| 19 - 29 | 19,8 - 20,2 |
| 20 - 30 | 22,0 - 22,35 |
| 6 - 16 | 22,36 - 22,7 |

(fortgesetzt)

| Intensität (%) | Beugungswinkel 2 θ / ° [Cu K(alpha 1)] |
|---|---|
| 23 - 33 | 23,3 - 23,59 |
| 22 - 32 | 23,60 - 23,8 |

wobei sich die Angabe 100 % auf die Intensität des höchsten Peaks im Röntgendiffraktogramm bezieht.

Die erfindungsgemäßen oder erfindungsgemäß hergestellten Schichtsilikate liegen bevorzugt in der Raumgruppe P 2/c vor. Im Falle, dass als Edukte, wie oben beschrieben, Tetraalkylammoniumhydroxid und Siliciumdioxid und/oder Siliciumdioxid-Precursor eingesetzt wurden, weisen die erfindungsgemäß hergestellten Schichtsilikate bevorzugt folgende Gitterparameter, bestimmt über Rietveld-Analyse auf:

- a = 7.33(1) A
- b = 10.72(1) A
- c = 17.51(1) Å
- beta = 115.7(1) °.

Die Rietveld-Analyse ist beschrieben in R. A. Young (Herausgeber), The Rietveld Method, Oxford University Press, 1995, Oxford, insbesondere in Kapitel 7: Analytical profile fitting of X-ray powder diffraction profiles in Rietveld analysis, Seiten 111-131.

Gemäß 29-Si MAS NMR-Spektroskopie weisen die erfindungsgemäßen Schichtsilikate ein Tieffeld-Signal bei in etwa 104 ppm auf, das charakteristisch ist für eine schichtsilikattypische Silanolgruppe.

Gemäß 1-H NMR-Spektroskopie weisen die erfindungsgemäßen Schichtsilikate ein Tieffeld-Signal bei in etwa 16,4 ppm auf, das charakteristisch ist für eine schichtsilikattypische Silanolgruppe.

Die angegebenen chemischen Verschiebungen beziehen sich auf TMS als internen Standard.

Das gemäß (2) erhaltene Schichtsilikat wird gemäß einer besonders bevorzugten Ausführungsform des spezifischen Verfahrens zur Herstellung erfindungsgemäßer Schicht- oder Gerüstsilikate gemäß (6) in mindestens einem zusätzlichen Schritt kalziniert.

Dabei ist es grundsätzlich möglich, die Suspension, enthaltend das mindestens eine Schichtsilikat, direkt der Kalzinierung zuzuführen. Bevorzugt wird das Schichtsilikat vor der Kalzinierung aus der Suspension, wie oben beschrieben, gemäß (3) abgetrennt.

Vor der Kalzinierung kann das aus der Suspension abgetrennte Schichtsilikat mindestens einem wie oben beschriebenen Waschschritt (4) und/oder mindestens einem wie oben beschriebenen Trocknungsschritt (5) unterworfen werden. Bevorzugt wird das aus der Suspension abgetrennte Schichtsilikat getrocknet und ohne Waschschritt der Kalzinierung zugeführt.

Die Kalzinierung gemäß (6) des gemäß (2) und/oder (3) und/oder (4) und/oder (5) erhaltenen Schichtsilikat erfolgt bevorzugt bei einer Temperatur im Bereich von bis zu 600 °C unter Erhalt eines Gerüstsilikates.

Gemäß einer bevorzugten Ausführungsform des erfindungsgemäßen Verfahrens erfolgt hierbei die Aufheizung des Schichtsilikat von Raumtemperatur auf eine Temperatur von bis zu 600 °C, wobei weiter bevorzugt die Aufheizrate im Bereich von 0,1 bis 12 °C/h, weiter bevorzugt von 1 bis 11 °C/h und besonders bevorzugt im Bereich von 5 bis 10 °C/h liegt.

Beispielsweise bevorzugt liegt diese Temperatur im Bereich von 200 bis 600 °C. Besonders bevorzugt sind Kalzinierungstemperaturen im Bereich von 300 bis 600 °C. Weiter bevorzugt sind Kalzinierungstemperaturen im Bereich von 400 bis 575 °C, insbesondere bevorzugt im Bereich von 450 bis 550 °C.

Gemäß einer möglichen Ausgestaltung des erfindungsgemäßen Verfahrens wird die Kalzinierung temperaturgestaffelt durchgeführt. Der Begriff "temperaturgestaffelt", wie er im Rahmen der vorliegenden Erfindung verwendet wird, bezeichnet eine Kalzinierung, bei der das zu kalzinierende Schichtsilikat auf eine bestimmte Temperatur aufgeheizt wird, bei dieser Temperatur für eine bestimmte Zeit gehalten wird, und von dieser Temperatur auf mindestens eine weitere Temperatur aufgeheizt wird und dort wiederum für eine bestimmte Zeit gehalten wird.

Bevorzugt wird das zu kalzinierende Schichtsilikat bei bis zu 4 Temperaturen, weiter bevorzugt bei bis zu 3 Temperaturen und besonders bevorzugt bei 2 Temperaturen gehalten.

Diesbezüglich liegt die erste Temperatur bevorzugt im Bereich von 500 bis 540 °C, weiter bevorzugt im Bereich von 505 bis 535 °C, weiter bevorzugt im Bereich von 510 bis 530 °C und insbesondere bevorzugt im Bereich von 515 bis 525 °C. Diese Temperatur wird bevorzugt für eine Zeit im Bereich von 8 bis 24 h, weiter bevorzugt von 9 bis 18 h und insbesondere von 10 bis 14 Stunden gehalten.

Die zweite Temperatur liegt bevorzugt im Bereich von größer 540 bis 600 °C, weiter bevorzugt im Bereich von 550 bis 580 °C und insbesondere bevorzugt im Bereich von 555 bis 570 °C. Diese Temperatur wird bevorzugt für eine Zeit im Bereich von 0,5 bis 6 h, weiter bevorzugt von 1 bis 4 h und insbesondere von 1 bis 3 Stunden gehalten.

Demgemäß betrifft die vorliegende Erfindung auch ein Gerüstsilikat hergestellt durch ein wie oben beschriebenes Verfahren, das dadurch gekennzeichnet ist, dass die Kalzinierung temperaturgestaffelt im Bereich von bis zu 600 °C, bevorzugt von 300 bis 600 °C erfolgt.

Die Kalzinierung kann in jeder geeigneten Atmosphäre erfolgen wie beispielsweise Luft, Magerluft, Stickstoff, Wasserdampf, synthetische Luft, Kohlendioxid. Bevorzugt erfolgt die Kalzinierung unter Luft.

Die Kalzinierung kann in jeder dafür geeigneten Vorrichtung durchgeführt werden. Bevorzugt erfolgt die Kalzinierung in einem Drehrohr, in einem Bandkalzinierer, in einem Muffelofen, in situ in einer Vorrichtung, in der das Silikat zu einem späteren Zeitpunkt bestimmungsgemäß beispielsweise als Molekularsieb, Katalysator oder für eine andere, unten beschriebene Anwendung eingesetzt wird. Insbesondere bevorzugt sind hierbei Drehrohr und Bandkalzinierer.

Gemäß einer weiteren möglichen Ausführungsform der vorliegenden Erfindung, in der das gemäß (2) erhaltene Schichtsilikat bevorzugt über Sprühtrocknungs- oder Sprühgranulierverfahren aus der Suspension abgetrennt wird, werden die Bedingungen, unter denen die Abtrennung durchgeführt wird, so gewählt, dass während der Abtrennung zumindest ein Teil des Schichtsilikates zum Gerüstsilikat umgewandelt wird. Bevorzugt werden dabei Temperaturen während der Abtrennung gewählt, die mindestens 225 °C betragen. Diese Verfahrensvariante bietet den Vorteil, dass die Schritte Abtrennung, Trocknung und zumindest teilweise Calcinierung in einem einzigen Schritt zusammengefasst werden können.

Gemäß dem erfindungsgemäßen Verfahren wird nach dem Kalzinieren ein Gerüstsilikat erhalten. Demgemäß betrifft die vorliegende Erfindung auch das wie oben beschriebene Gerüstsilikat, hergestellt durch ein Verfahren zusätzlich umfassend

(6) Calcinieren des gemäß (2) erhaltenen und

- gegebenenfalls gemäß (3) abgetrennten und
- gegebenenfalls gemäß (4) gewaschenen und/oder gemäß (5) getrockneten Schichtsilikat

unter Erhalt eines Gerüstsilikates.

Demgemäß betrifft die vorliegende Erfindung auch ein Gerüstsilikat, erhältlich durch das oben beschriebene Verfahren, umfassend die Kalzinierung gemäß (6), erhältlich unter Verwendung von DMDPAH.

Wie bereits beschrieben betrifft die vorliegende Erfindung ein Gerüstsilikat , das dadurch gekennzeichnet ist, dass im Röntgenbeugungsmuster durch Cu K alpha 1-Strahlung mindestens die folgenden Reflexe auftreten (Struktur RUB-41):

| Intensität / % | Beugungswinkel 2θ /° [Cu K(alpha 1)] |
|---|---|
| 100 | 9,8 - 10,2 |
| 24-34 | 11,0 - 11,4 |
| 9-19 | 15,5 - 15,9 |
| 12 - 22 | 19,4 - 19,6 |
| 19-29 | 19,6 - 19,8 |

wobei sich die Angabe 100 % auf die Intensität des höchsten Peaks im Röntgendiffraktogramm bezieht.

Bevorzugt betrifft die vorliegende Erfindung ein Gerüstsilikat, das dadurch gekennzeichnet ist, dass im Röntgenbeugungsmuster durch Cu K alpha 1-Strahlung mindestens die folgenden Reflexe auftreten (Struktur RUB-41):

| Intensität / % | Beugungswinkel 2θ /° [Cu K(alpha 1)] |
|---|---|
| 100 | 9,8 - 10,2 |
| 24 - 34 | 11,0 - 11,4 |
| 9 - 19 | 15,5 - 15,9 |
| 12 - 22 | 19,4 - 19,6 |
| 19 - 29 | 19,6 - 19,8 |
| 8 - 18 | 26,2 - < 26,3 |

(fortgesetzt)

| Intensität / % | Beugungswinkel 2θ /° [Cu K(alpha 1)] |
|---|---|
| 8 - 18 | 26,3 - < 26,4 |
| 13 - 23 | 26,4 - 26,6 |

wobei sich die Angabe 100 % auf die Intensität des höchsten Peaks im Röntgendiffraktogramm bezieht.

Die erfindungsgemäßen Gerüstsilikate liegen bevorzugt in der Raumgruppe P 2/c vor. Im Falle, dass als Edukte, wie oben beschrieben, Tetraalkylammoniumhydroxid und Siliciumdioxid und/oder Siliciumdioxid-Precursor eingesetzt wurden, weisen diese Gerüstsilikate bevorzugt folgende Gitterparameter, bestimmt über Rietveld-Analyse auf:

- a = 7,34(1) Å
- b = 8,72(1) Å
- c = 17,17(1) Å
- beta = 114,2(1) °

Gemäß 29-Si MAS NMR-Spektroskopie fehlt bei den erfindungsgemäßen Gerüstsilikaten das bei den oben beschriebenen, erfindungsgemäßen Schichtsilikaten gefundene Tieffeld-Signal bei in etwa 104 ppm auf, das charakteristisch ist für eine schichtsilikattypische Silanolgruppe.

Die erfindungsgemäßen Gerüstsilikate weisen bevorzugt 8 MR- und 10 MR-Kanäle auf, wobei die 8 MR-Kanäle insbesondere bevorzugt parallel zu c der Elementarzelle, wie oben angegeben, und die 10 MR-Kanäle insbesondere bevorzugt parallel zu a der Elementarzelle, wie oben angegeben, verlaufen. Hinsichtlich der Definition der 8MR- und 10MR-Kanäle sei auf Ch. Baerlocher, W.M. Meier, D.H. Olson, Atlas of Zeolite Framework Types, 5. Auflage, 2001, Elsevier, Seiten 10 - 15 verwiesen.

Insbesondere zeichnen sich die erfindungsgemäßen Gerüstsilikate durch eine im Wesentlichen monomodale Verteilung bezüglich der zweidimensionalen 8 MR- und 10 MR-Kanal-Porenstruktur aus. Die Porenöffnungen sowohl der 8 MR-Kanäle als auch der 10 MR-Kanäle weisen diesbezüglich jeweils eine Fläche bevorzugt im Bereich von (5,70 - 6,00) x (4,00 - 4,20) $Å^2$, besonders bevorzugt von (5,80 - 5,90) x (4,05 - 4,15) $Å^2$ auf.

Die erfindungsgemäßen Gerüstsilikate weisen bevorzugt Mikroporen mit einer spezifischen Oberfläche im Bereich von größer 200 $m^2$/g, weiter bevorzugt von größer 200 bis 800 $m^2$/g, weiter bevorzugt von 300 bis 700 $m^2$/g und besonders bevorzugt von 400 bis 600 $m^2$/g auf, jeweils bestimmt gemäß DIN 66135 (Langmuir).

Die erfindungsgemäßen Gerüstsilikate weisen bevorzugt Poren mit einem Porenvolumen im Bereich von 0,15 bis 0,21 ml/g, weiter bevorzugt von 0,16 bis 0,20 ml/g und besonders bevorzugt von 0,17 bis 0,19 ml/g auf, jeweils bestimmt gemäß DIN 66134.

Demgemäß stellen die erfindungsgemäßen Gerüstsilikate Silikate eines mikroporösen zeolithischen Typs dar.

Die thermische Stabilität der erfindungsgemäßen Gerüstsilikate liegt bevorzugt bei mindestens 600 °C, weiter vorzugsweise bei mehr als 600 °C.

Der Begriff "thermische Stabilität", wie er in diesem Zusammenhang im Rahmen der vorliegenden Erfindung verwendet wird, bezeichnet diejenige Temperatur, bei der unter Normaldruck die spezifische Gitterstruktur des Gerüstsilikates erhalten bleibt.

Gemäß weiterer Ausführungsformen der vorliegenden Erfindung ist es möglich, dass die erfindungsgemäß hergestellten Schicht- oder Gerüstsilikate neben Silicium und Sauerstoff mindestens ein Atom mindestens eines anderen Elementes enthalten. So ist es möglich, in die Silikatstruktur mindestens ein Atom mindestens eines der Elemente Aluminium, Bor, Eisen, Titan, Zinn, Germanium, Zirkon, Vanadium oder Niob einzubauen.

Ebenso ist es denkbar, 2, 3 oder mehr voneinander verschiedene Heteroatome einzubauen. Beispielsweise sind in diesem Zusammenhang die Kombinationen Aluminium und Bor, Aluminium und Zinn, Aluminium und Titan, Aluminium und Germanium, Aluminium und Vanadium, Aluminium und Zirkon, Bor und Zinn, Bor und Titan, Bor und Germanium, Bor und Vanadium, Bor und Zirkon oder auch Kombinationen aus beispielsweise 3 verschiedenen Heterotatomen zu erwähnen.

Wird beispielsweise Aluminium eingebaut, so können neben der Tetraalkylammoniumverbindung und dem Siliciumdioxid und/oder Siliciumdioxid-Precursor als Edukte beispielsweise metallisches Aluminium wie beispielsweise Aluminiumpulver oder geeignete Aluminate wie beispielsweise Alkalialuminate und/oder Aluminiumalkoholate wie beispielsweise Aluminiumtriisopropylat eingesetzt werden.

Unter anderem bevorzugt wird bei dem Einbau von Aluminium Natriumaluminat als Aluminiumquelle verwendet. Weiter bevorzugt wird die Aluminiumquelle in einer solchen Menge eingesetzt, dass das molare Verhältnis von Al : Si im erfindungsgemäßen Schicht- oder Gerüstsilikat , insbesondere im erfindungsgemäßen Gerüstsilikat, im Bereich von 1:15 bis 1:80, weiter bevorzugt im Bereich von 1:20 bis 1:70 und weiter bevorzugt im Bereich von 1:25 bis 1:60 liegt. Besonders bevorzugt ist beim Einbau von Aluminium die Zugabe von Alkali- oder Erdalkalimetallionen, weiter bevorzugt von Alkalimetallionen und insbesondere bevorzugt von Natriumionen. Überraschend wurde gefunden, dass sich bei der Zugabe dieser Ionen die Temperatur bei der hydrothermalen Kristallisation senken lässt. Liegt beispielsweise die konventionelle Temperatur der hydrothermalen Synthese bei etwa 150 °C, so kann durch die erfindungsgemäße Zugabe von Natriumionen eine Temperaturerniedrigung von in etwa 10 °C erreicht werden, was zu einem ökonomischeren Verfahren führt. Gleichzeitig wird die erfindungsgemäß kurze Kristallisationszeit beibehalten.

Wird beispielsweise Bor eingebaut, so können neben der Tetraalkylammoniumverbindung und dem Siliciumdioxid und/oder Siliciumdioxid-Precursor als Edukte beispielsweise freie Borsäure und/oder Borate und/oder Borsäureester wie etwa Borsäuretriethylester oder Borsäuretrimethylester eingesetzt werden.

Bevorzugt wird bei dem Einbau von Bor beispielsweise Borsäure als Borquelle verwendet. Weiter bevorzugt wird die Borquelle in einer solchen Menge eingesetzt, dass das molare Verhältnis von B : Si im erfindungsgemäßen Schicht- oder Gerüstsilikat, insbesondere im erfindungsgemäßen Gerüstsilikat, im Bereich von 1:5 bis 1:50, weiter bevorzugt im Bereich von 1:10 bis 1:45 und weiter bevorzugt im Bereich von 1:15 bis 1:40 liegt. Bezogen auf Si liegen die Wassergehalte der hydrothermal zu kristallisierenden Mischung bevorzugt im Bereich von in etwa 0,1 bis in etwa 1,0, ausgedrückt als Molverhältnis Si:Wasser.

Bezogen auf Si liegen die DMDPAH-Gehalte der hydrothermal zu kristallisierenden Mischung bevorzugt im Bereich von in etwa 1,5 bis in etwa 2,5, ausgedrückt als Molverhältnis Si:DMDPAH.

Wird beispielsweise Titan eingebaut, so können neben der Tetraalkylammoniumverbindung und dem Siliciumdioxid und/oder Siliciumdioxid-Precursor als Edukte beispielsweise Titan-Alkoholate wie beispielsweise Titanethanolate oder Titanpropylate eingesetzt werden.

Wird beispielsweise Zinn eingebaut, so können neben der Tetraalkylammoniumverbindung und dem Siliciumdioxid und/oder Siliciumdioxid-Precursor als Edukte beispielsweise Zinnchloride und/oder metallorganische Zinnverbindungen wie etwa Zinnalkoholate oder Chelate wie etwa Zinnacetylacetonate eingesetzt werden.

Wird beispielsweise Zirkon eingebaut, so können neben der Tetraalkylammoniumverbindung und dem Siliciumdioxid und/oder Siliciumdioxid-Precursor als Edukte beispielsweise Zirkonchlorid und/oder Zirkonalkoholate eingesetzt werden.

Wird beispielsweise Vanadium oder Germanium oder Niob eingebaut, so können neben der Tetraalkylammoniumverbindung und dem Siliciumdioxid und/oder Siliciumdioxid-Precursor als Edukte beispielsweise Vanadiumchlorid oder Germaniumchlorid oder Niobchlorid eingesetzt werden.

Demgemäß betrifft die vorliegende Erfindung auch die wie oben beschriebenen Schicht- und/oder Gerüst-, insbesondere die wie oben beschriebenen Gerüst-Silikate, wobei die Silikate neben Si und O zusätzlich mindestens eines der Elemente Al, B, Fe, Ti, Sn, Ge, Zr, V oder Nb enthalten.

Je nach Art der Atome, die in das Gitter eingebaut werden, kann ein negativ geladenes Gerüst entstehen, das es beispielsweise ermöglicht, das Silikat mit Kationen zu beladen. Als solche sind unter anderem die Ammoniumionen $R_1R_2R_3R_4N^+$ der Templatverbindungen, Platin-, Palladium-, Rhodium- oder Rutheniumkationen, Goldkationen, Alkalimetallkationen wie beispielsweise Natrium- oder Kalium-Ionen oder Erdalkalimetallkationen wie beispielsweise Magnesium- oder Calcium-Ionen zu erwähnen. Ebenso sind in diesem Zusammenhang beispielsweise Molybdän, Wolfram, Rhenium oder Silber zu erwähnen. So sind einerseits die erfindungsgemäß hergestellten, nur Silicium enthaltenden Silikate der Struktur RUB-39 und/oder RUB-41 beladbar, und andererseits auch die oben beschriebenen Silikate, die mindestens ein Heteroatom enthalten.

In vielen technischen Anwendungen ist es von Anwenderseite her oft erwünscht, nicht das kristalline Material an sich einzusetzen, sondern das kristalline Material, das zu Formkörpern verarbeitet wurde. Solche Formkörper sind gerade in vielen großindustriellen Verfahren nötig, um beispielsweise Abtrennungen von Stoffen aus Stoffgemischen in beispielsweise Rohrreaktoren sinnvoll betrieben zu können.

Demgemäß betrifft die vorliegende Erfindung auch einen Formkörper, enthaltend das oben beschriebene kristalline, mikroporöse Gerüstsilikat. Von der vorliegenden Erfindung mit umfasst sind auch Formkörper, umfassend das oben beschriebene Schichtsilikat.

Generell kann der Formkörper neben dem erfindungsgemäßen Gerüstsilikat sämtliche denkbaren weiteren Verbindungen umfassen, solange gewährleistet ist, dass der resultierende Formkörper für die erwünschte Anwendung geeignet ist.

Gemäß einer Ausführungsform wird der erfindungsgemäße Formkörper ohne Verwendung eines Bindemittels durch eines der unten beschriebenen Verformungsverfahren hergestellt. Der Begriff "Bindemittel", wie er in diesem Zusammenhang im Rahmen der vorliegenden Erfindung verwendet wird, bezeichnet ein Bindemittel, das nach dem unten beschriebenen Calcinieren des Formkörpers entweder in seiner ursprünglichen Form oder in umgewandelter Form im Formkörper verbleibt.

Im Rahmen der vorliegenden Erfindung ist es bevorzugt, dass bei der Herstellung des Formkörpers mindestens ein geeignetes Bindemittel verwendet wird. Im Rahmen dieser bevorzugten Ausführungsform wird weiter bevorzugt ein Gemisch aus Gerüstsilikat und dem mindestens einen Bindemittel hergestellt.

Demgemäß beschreibt die vorliegende Erfindung auch ein Verfahren zur Herstellung eines Formkörpers, enthaltend ein wie oben beschriebenes Gerüstsilikat, hergestellt durch ein spezifisches Verfahren, umfassend den Schritt

(I) Herstellen eines Gemischs, enthaltend das wie oben beschriebene Gerüstsilikat hergestellt durch ein spezifisches Verfahren, und mindestens ein Bindemittel.

Als Bindemittel sind generell sämtliche Verbindungen geeignet, die eine über die ohne Bindemittel gegebenenfalls vorhandene Physisorption hinausreichende Adhäsion und/oder Kohäsion zwischen den zu bindenden Teilchen des Gerüstsilikats vermittelt. Beispiele für solche Bindemittel sind etwa Metalloxide wie beispielsweise $SiO_2$, $Al_2O_3$, $TiO_2$, $ZrO_2$ oder $MgO$ oder Tone oder Gemische aus zwei oder mehr dieser Verbindungen.

Als $Al_2O_3$-Bindemittel sind insbesondere Tonmineralien und natürlich vorkommende oder künstlich hergestellte Aluminiumoxide wie beispielsweise alpha-, beta-, gamma-, delta-, eta-, kappa-, chi- oder theta-Aluminiumoxid sowie deren anorganische oder metallorganische Vorläuferverbindungen wie beispielsweise Gibbsit, Bayerit, Boehmit, Pseudoboehmit oder Trialkoxyaluminate wie beispielsweise Aluminiumtriisopropylat bevorzugt. Weitere bevorzugte Bindemittel sind amphiphile Verbindungen mit einem polaren und einem nichtpolaren Anteil sowie Graphit. Weitere Bindemittel sind etwa Tone wie etwa Montmorillonite, Kaoline, Metakaoline, Hectorit, Bentonite, Halloysite, Dickite, Nacrite oder Anaxite.

Diese Bindemittel können als solche eingesetzt werden. Ebenso ist es im Rahmen der vorliegenden Erfindung auch möglich, Verbindungen einzusetzen, aus denen in mindestens einem weiteren Schritt bei der Herstellung der Formkörper das Bindemittel gebildet wird. Beispiele für solche Bindemittelvorstufen sind etwa Tetraalkoxysilane, Tetraalkoxytitanate, Tetraalkoxyzirkonate oder ein Gemisch aus zwei oder mehr verschiedenen Tetraalkoxysilanen oder ein Gemisch aus zwei oder mehr verschiedenen Tetraalkoxytitanaten oder ein Gemisch aus zwei oder mehr verschiedenen Tetraalkoxyzirkonaten oder ein Gemisch aus mindestens einem Tetraalkoxysilan und mindestens einem Tetraalkoxytitanat oder aus mindestens einem Tetraalkoxysilan und mindestens einem Tetraalkoxyzirkonat oder aus mindestens einem Tetraalkoxytitanat und mindestens einem Tetraalkoxyzirkonat oder ein Gemisch aus mindestens einem Tetraalkoxysilan und mindestens einem Tetraalkoxytitanat und mindestens einem Tetraalkoxyzirkonat.

Ganz besonders bevorzugt sind im Rahmen der vorliegenden Erfindung Bindemittel, die entweder ganz oder teilweise aus $SiO_2$ bestehen oder eine Vorstufe zu $SiO_2$ darstellen, aus der in mindestens einem weiteren Schritt bei der Herstellung der Formkörper $SiO_2$ gebildet wird. In diesem Zusammenhang können sowohl kolloidales Siliciumdioxid als auch so genanntes "wet process"-Siliciumdioxid als auch so genanntes "dry process"-Siliciumdioxid eingesetzt werden. In diesen Fällen handelt es sich ganz besonders bevorzugt um amorphes Siliciumdioxid, wobei die Größe der Siliciumdioxidpartikel beispielsweise im Bereich von 5 bis 100 nm liegt und die Oberfläche der Siliciumdioxidpartikel im Bereich von 50 bis 500 m$^2$/g liegt.

Kolloidales Siliciumdioxid, bevorzugt als alkalische und/oder ammoniakalische Lösung, weiter bevorzugt als ammoniakalische Lösung, ist unter anderem etwa kommerziell erhältlich als Ludox®, Syton®, Nalco® oder Snowtex®.

"Wet process"-Siliciumdioxid ist unter anderem etwa kommerziell erhältlich als Hi-Sil®, Ultrasil®, Vulcasil®, Santocel®, Valron-Estersil®, Tokusil® oder Nipsil®.

"Dry process"-Siliciumdioxid ist unter anderem etwa kommerziell erhältlich als Aerosil®, Reolosil®, Cab-O-Sil®, Fransil® oder ArcSilica®.

Unter anderem bevorzugt wird im Rahmen der vorliegenden Erfindung eine ammoniakalische Lösung von kolloidalem Siliciumdioxid.

Demgemäß beschreibt die vorliegende Erfindung auch einen Formkörper, wie oben beschrieben, zusätzlich enthaltend $SiO_2$ als Bindemittel.

Ebenso betrifft die vorliegende Erfindung auch ein Verfahren, wie oben beschrieben, wobei das gemäß (I) eingesetzte Bindemittel ein $SiO_2$ enthaltendes oder bildendes Bindemittel ist.

Demgemäß beschreibt die vorliegende Erfindung auch ein Verfahren, wie oben beschrieben, wobei das Bindemittel ein kolloidales Siliciumdioxid ist.

Bevorzugt werden die Bindemittel in einer Menge eingesetzt, die zu letztlich resultierenden Formkörpern führt, deren Bindemittelgehalt im Bereich von bis zu 80 Gew.-% liegt, weiter bevorzugt im Bereich von 5 bis 80 Gew.-%, weiter bevorzugt im Bereich von 10 bis 70 Gew.-%, weiter bevorzugt im Bereich von 10 bis 60 Gew.-%, weiter bevorzugt im Bereich von 15 bis 50 Gew.-%, weiter bevorzugt im Bereich von 15 bis 45 Gew.-% und besonders bevorzugt im Bereich von 15 bis 40 Gew.-%, jeweils bezogen auf das Gesamtgewicht des letztlich resultierenden Formkörpers.

Der Begriff "letztlich resultierender Formkörper", wie er im Rahmen der vorliegenden Erfindung verwendet wird, bezeichnet einen Formkörper, wie er aus den wie unten beschriebenen Trocknungs- und Kalzinierungsstufen (IV) und/oder (V), bevorzugt (IV) und (V) und insbesondere bevorzugt (V) erhalten wird.

Das Gemisch aus Bindemittel oder Vorstufe zu einem Bindemittel und dem zeolithischen Material kann zur weiteren Verarbeitung und zur Ausbildung einer plastischen Masse mit mindestens einer weiteren Verbindung versetzt werden. Unter anderem bevorzugt sind hier Porenbildner zu nennen.

Als Porenbildner können im erfindungsgemäßen Verfahren sämtliche Verbindungen eingesetzt werden, die bezüglich des fertigen Formkörpers eine bestimmte Porengröße und/oder eine bestimmte Porengrößenverteilung und/oder bestimmte Porenvolumina bereitstellt.

Bevorzugt werden als Porenbildner im erfindungsgemäßen Verfahren Polymere eingesetzt, die in Wasser oder in wässrigen Lösungsmittelgemischen dispergier-, suspendier- oder emulgierbar sind. Bevorzugte Polymere sind hierbei polymere Vinylverbindungen wie beispielsweise Polyalkylenoxide wie Polyethylenoxide, Polystyrol, Polyacrylate, Polymethacrylate, Polyolefine, Polyamide und Polyester, Kohlenhydrate wie etwa Cellulose oder Cellulosederivate, wie beispielsweise Methylcellulose, oder Zucker oder Naturfasern. Weitere geeignete Porenbildner sind etwa Pulp oder Graphit.

Werden bei der Herstellung des Gemischs gemäß (I) Porenbildner eingesetzt, so liegt der Gehalt des Gemischs gemäß (I) an Porenbildner, bevorzugt Polymer bevorzugt im Bereich von 5 bis 90 Gew.-%, bevorzugt im Bereich von 15 bis 75 Gew.-% und besonders bevorzugt im Bereich von 25 bis 55 Gew.-%, jeweils bezogen auf die Menge an erfindungsgemäßem Gerüstsilikat im Gemisch gemäß (I).

Sollte dies für die zu erzielende Porengrößenverteilung erwünscht sein, kann auch ein Gemisch aus zwei oder mehr Porenbildnern eingesetzt werden.

Die Porenbildner werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt. Gemäß einer bevorzugten Ausführungsform des erfindungsgemäßen Verfahrens werden dabei Formkörper erhalten, die Poren, bestimmt gemäß DIN 66134, im Bereich von mindestens 0,6 ml/g, bevorzugt im Bereich von 0,6 bis 0,8 ml/g und insbesondere bevorzugt im Bereich von mehr als 0,6 ml/g bis 0,8 ml/g aufweisen.

Die spezifische Oberfläche des erfindungsgemäßen Formkörpers, bestimmt gemäß DIN 66131, liegt im Allgemeinen bei mindestens 350 m$^2$/g, bevorzugt bei mindestens 400 m$^2$/g und insbesondere bevorzugt bei mindestens 425 m$^2$/g. Beispielsweise kann die spezifische Oberfläche im Bereich von 350 bis 500 m$^2$/g oder 400 bis 500 m$^2$/g oder 425 bis 500 m$^2$/g liegen.

Demgemäß beschreibt die vorliegende Erfindung auch einen Formkörper, wie oben beschrieben, mit einer spezifischen Oberfläche von mindestens 350 m$^2$/g, enthaltend Poren mit einem Porenvolumen von mindestens 0,6 ml/g.

Bei der Herstellung des Gemisches gemäß (I) wird im Rahmen einer ebenfalls bevorzugten Ausführungsform des erfindungsgemäßen Verfahrens mindestens ein Anteigungsmittel zugegeben.

Als Anteigungsmittel können alle dafür geeigneten Verbindungen verwendet werden. Vorzugsweise sind dies organische, insbesondere hydrophile Polymere wie beispielsweise Cellulose, Cellulosederivate wie beispielsweise Methylcellulose, Stärke wie beispielsweise Kartoffelstärke, Tapetenpflaster, Polyacrylate, Polymethacrylate, Polyvinylalkohol, Polyvinylpyrrolidon, Polyisobuten oder Polytetrahydrofuran.

Insbesondere können demgemäß als Anteigungsmittel Verbindungen eingesetzt werden, die auch als Porenbildner wirken.

Diese Anteigungsmittel werden in einer besonders bevorzugten Ausführungsform des erfindungsgemäßen Verfahrens, wie untenstehend beschrieben, in einem Schritt (V) durch Calcinieren unter Erhalt des porösen Formkörpers entfernt.

Gemäß einer weiteren Ausführungsform der vorliegenden Erfindung wird bei der Herstellung des Gemisches gemäß (I) mindestens ein saurer Zusatzstoff zugesetzt. Ganz besonders bevorzugt sind organische saure Verbindungen, die sich in dem bevorzugten Schritt (V), wie untenstehend beschrieben, durch Calcinieren entfernen lassen. Besonders bevorzugt sind Carbonsäuren wie beispielsweise Ameisensäure, Oxalsäure und/oder Citronensäure. Ebenso ist es möglich, zwei oder mehr dieser sauren Verbindungen einzusetzen.

Die Zugabereihenfolge der Bestandteile des das Gerüstsilikat enthaltenden Gemischs gemäß (I) ist nicht kritisch. Es ist sowohl möglich, zuerst das mindestens eine Bindemittel zuzugeben, anschließend den mindestens einen Porenbildner, die mindestens eine saure Verbindung und zum Schluss das mindestens eine Anteigungsmittel, als auch die Reihenfolge bezüglich des mindestens einen Bindemittels, des mindestens einen Porenbildners, der mindestens einen sauren Verbindung und des mindestens einen Anteigungsmittels zu vertauschen.

Nach der Zugabe des Bindemittels zum Gerüstsilikat-Feststoff, dem gegebenenfalls mindestens eine der oben beschriebenen Verbindungen bereits zugegeben worden war, wird das Gemisch gemäß (I) in der Regel 10 bis 180 Minuten homogenisiert. Besonders bevorzugt werden zur Homogenisierung unter anderem Kneter, Koller oder Extruder eingesetzt. Bevorzugt wird das Gemisch geknetet. Im industriellen Maßstab wird zur Homogenisierung bevorzugt gekollert.

Demgemäß beschreibt die vorliegende Erfindung auch ein Verfahren zur Herstellung eines Formkörpers, enthaltend ein wie oben beschriebenes Gerüstsilikat, hergestellt durch ein spezifisches Verfahren, umfassend die Schritte

(I) Herstellen eines Gemischs, enthaltend das wie oben beschriebene Gerüstsilikat hergestellt durch ein spezifisches Verfahren, und mindestens ein Bindermaterial;

(II) Kneten des Gemischs.

Bei der Homogenisierung wird in der Regel bei Temperaturen im Bereich von ungefähr 10 °C bis zum Siedepunkt des Anteigungsmittels und Normaldruck oder leichtem überatmosphärischem Druck gearbeitet. Danach kann gegebenenfalls mindestens eine der oben beschriebenen Verbindungen zugegeben werden. Das so erhaltene Gemisch wird solange homogenisiert, vorzugsweise geknetet, bis eine verstrangbare plastische Masse entstanden ist.

Das homogenisierte Gemisch wird gemäß einer weiter bevorzugten Ausführungsform der vorliegenden Erfindung verformt.

Im Rahmen der vorliegenden Erfindung sind für die Verfahren im Rahmen der Formgebung solche Verfahren bevorzugt, bei denen die Verformung durch Extrusion in üblichen Extrudern, beispielsweise zu Strängen mit einem Durchmesser von bevorzugt 1 bis 10 mm und besonders bevorzugt 2 bis 5 mm, erfolgt. Derartige Extrusionsvorrichtungen werden beispielsweise in Ullmann's Enzyklopädie der Technischen Chemie, 4. Auflage, Bd. 2, S. 295 ff., 1972 beschrieben. Neben der Verwendung eines Extruders wird ebenfalls vorzugsweise eine Strangpresse zur Verformung verwendet.

Prinzipiell können jedoch zur Formgebung alle bekannten und/oder geeigneten Knet- und Verformungsvorrichtungen bzw. Verfahren eingesetzt werden. Unter anderem sind hierbei zu nennen:

(a) Brikettieren, d.h. mechanisches Verpressen mit oder ohne Zusatz von zusätzlichem Bindermaterial;
(b) Pelletieren, d.h. Kompaktieren durch kreisförmige und/oder rotierende Bewegungen;
(c) Sintern, d.h. das zu verformende Materials wird einer thermischen Behandlung ausgesetzt;
(d) heiß-isostatisches Pressen.

Beispielsweise kann die Formgebung aus der folgenden Gruppe ausgewählt sein, wobei die Kombination von mindestens zwei dieser Methoden explizit eingeschlossen ist: Brikettieren durch Stempelpressen, Walzenpressen, Ringwalzenpressen, Brikettieren ohne Bindemittel; Pelletieren, Schmelzen, Spinning-Techniken, Abscheidung, Schäumen, Sprühtrocknen; Brennen im Schachtofen, Konvektionsofen, Wanderrost, Drehrohrofen, Kollern.

Das Kompaktieren kann bei Umgebungsdruck oder bei gegenüber dem Umgebungsdruck erhöhtem Druck stattfinden, beispielsweise in einem Druckbereich von 1 bar bis zu mehreren hundert bar. Weiterhin kann das Kompaktieren bei Umgebungstemperatur oder bei gegenüber der Umgebungstemperatur erhöhter Temperatur stattfinden, beispielsweise in einem Temperaturbereich von 20 bis 300 °C. Ist Trocknen und/oder Brennen Bestandteil des Formgebungsschritt, so sind Temperaturen bis zu 600 °C denkbar. Schließlich kann das Kompaktieren in der Umgebungs-Atmosphäre stattfinden oder in einer kontrollierten Atmosphäre. Kontrollierte Atmosphären sind beispielsweise Schutzgas-Atmosphären, reduzierende und/oder oxidierende Atmosphären.

Demgemäß beschreibt die vorliegende Erfindung auch ein Verfahren zur Herstellung eines Formkörpers, enthaltend ein wie oben beschriebenes Gerüstsilikat. hergestellt durch ein spezifisches Verfahren, umfassend die Schritte

(I) Herstellen eines Gemischs, enthaltend das wie oben beschriebene Gerüstsilikat hergestellt durch ein spezifisches Verfahren, und mindestens ein Bindermaterial;
(II) Kneten des Gemischs;
(III) Verformen des gekneteten Gemischs unter Erhalt mindestens eines Formkörpers.

Die Form der erfindungsgemäß hergestellten Formkörper kann beliebig gewählt werden. Insbesondere sind unter anderem Kugeln, ovale Formen, Zylinder oder Tabletten möglich. Ebenso sind Hohlstrukturen wie beispielsweise Hohlzylinder oder bienenwabenförmige Strukturen oder auch sternförmige Geometrien zu nennen.

Besonders bevorzugt wird im Rahmen der vorliegenden Erfindung das Verformen durch Extrusion des gemäß (II) erhaltenen gekneteten Gemischs durchgeführt, wobei als Extrudate weiter bevorzugt im wesentlichen zylinderförmige Stränge mit einem Durchmesser im Bereich von 1 bis 20 mm, bevorzugt im Bereich von 1 bis 10 mm, weiter bevorzugt im Bereich von 2 bis 10 mm und weiter bevorzugt im Bereich von 2 bis 5 mm erhalten werden.

Dem Schritt (III) schließt sich im Rahmen der vorliegenden Erfindung bevorzugt mindestens ein Trocknungsschritt an. Dieser mindestens eine Trocknungsschritt erfolgt dabei bei Temperaturen im Bereich von im Allgemeinen 80 bis 160 °C, bevorzugt von 90 bis 145 °C und besonders bevorzugt von 100 bis 130 °C, wobei die Trocknungsdauer im Allgemeinen bei 6 h oder mehr, beispielsweise im Bereich von 6 bis 24 h, liegt. Es sind jedoch in Abhängigkeit vom Feuchtigkeitsgehalt des zu trocknenden Materials auch kürzere Trockenzeit wie beispielsweise ungefähr 1, 2, 3, 4, oder 5 h möglich.

Vor und/oder nach dem Trocknungsschritt kann das bevorzugt erhaltene Extrudat beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Demgemäß betrifft die vorliegende Erfindung auch ein Verfahren zur Herstellung eines Formkörpers, enthaltend ein wie oben beschriebenes Gerüstsilikat, hergestellt durch ein spezifisches Verfahren, umfassend die Schritte

(I) Herstellen eines Gemischs, enthaltend das wie oben beschriebene Gerüstsilikat hergestellt durch ein spezifisches Verfahren, und mindestens ein Bindermaterial;

(II) Kneten des Gemischs;

(III) Verformen des gekneteten Gemischs unter Erhalt mindestens eines Formkörpers;

(IV) Trocknen des mindestens einen Formkörpers.

Dem Schritt (IV) schließt sich im Rahmen der vorliegenden Erfindung bevorzugt mindestens ein Calcinierungsschritt an. Die Calcinierung wird bei Temperaturen im Bereich von im allgemeinen 350 bis 750 °C und bevorzugt von 450 bis 600 °C durchgeführt.

Die Calcinierung kann unter jeder geeigneten Gasatmosphäre erfolgen, wobei Luft und/oder Magerluft bevorzugt sind. Weiter wird die Calcinierung bevorzugt in einem Muffelofen, einem Drehrohrofen und/oder einem Bandkalzinierofen durchgeführt, wobei die Calcinierungsdauer im Allgemeinen bei 1 h oder mehr, beispielsweise im Bereich von 1 bis 24 h oder im Bereich von 3 bis 12 h liegt. Demgemäß ist es im Rahmen erfindungsgemäßen Verfahrens beispielsweise möglich, den Formkörper einmal, zweimal oder öfter für jeweils mindestens 1 h wie beispielsweise jeweils im Bereich von 3 bis 12 h zu calcinieren, wobei die Temperaturen während eines Calcinierungsschrittes gleich bleiben oder kontinuierlich oder diskontinuierlich geändert werden können. Wird zweimal oder öfter calciniert, können sich die Calcinierungstemperaturen in den einzelnen Schritten unterscheiden oder gleich sein.

Demgemäß beschreibt die vorliegende Erfindung auch ein Verfahren zur Herstellung eines Formkörpers, enthaltend ein wie oben beschriebenes Gerüstsilikat, hergestellt durch ein spezifisches Verfahren, umfassend die Schritte

(I) Herstellen eines Gemischs, enthaltend das wie oben beschriebene Gerüstsilikat hergestellt durch ein spezifisches Verfahren, und mindestens ein Bindermaterial;

(II) Kneten des Gemischs;

(III) Verformen des gekneteten Gemischs unter Erhalt mindestens eines Formkörpers;

(IV) Trocknen des mindestens einen Formkörpers;

(V) Calcinieren des mindestens einen getrockneten Formkörpers.

Nach dem Calcinierungsschritt kann das calcinierte Material beispielsweise zerkleinert werden. Dabei wird vorzugsweise ein Granulat oder Splitt mit einem Partikeldurchmesser von 0,1 bis 5 mm, insbesondere 0,5 bis 2 mm erhalten.

Vor und/oder nach dem Trocknen und/oder vor und/oder nach dem Calcinieren kann der mindestens eine Formkörper gegebenenfalls mit einer konzentrierten oder verdünnten Broenstedt-Säure oder einem Gemisch aus zwei oder mehr Broenstedt-Säuren behandelt werden. Geeignete Säuren sind beispielsweise Salzsäure, Schwefelsäure, Phosphorsäure, Salpetersäure oder Carbonsäuren, Dicarbonsäuren oder Oligo- oder Polycarbonsäuren wie beispielsweise Nitrilotriessigsäure, Sulfosalicylsäure oder Ethylendiaminotetraessigsäure.

Gegebenenfalls schließt sich an diese mindestens eine Behandlung mit mindestens einer Broenstedtsäure mindestens ein Trockenschritt und/oder mindestens ein Calcinierungsschritt an, der jeweils unter den oben beschriebenen Bedingungen durchgeführt wird.

Gemäß einer weiteren Ausführungsform des erfindungsgemäßen Verfahrens können die erfindungsgemäß erhaltenen Formkörper zur besseren Härtung einer Wasserdampfbehandlung unterzogen werden, nach der bevorzugt nochmals mindestens einmal getrocknet und/oder mindestens einmal calciniert wird. Beispielsweise wird nach mindestens einem Trockenschritt und mindestens einem nachfolgenden Calcinierschritt der calcinierte Formkörper der Wasserdampfbehandlung unterzogen und anschließend nochmals mindestens einmal getrocknet und/oder mindestens einmal calciniert.

Die erfindungsgemäß erhaltenen Formkörper weisen Härten auf, die im Allgemeinen im Bereich von 1 bis 20 N wie beispielsweise von 2 bis 15 N, bevorzugt im Bereich von 5 bis 15 N und besonders bevorzugt im Bereich von 10 bis 15 N liegen.

Demgemäß betrifft die vorliegende Erfindung auch einen Formkörper, wie oben beschrieben, mit einer Schneidhärte im Bereich von 2 bis 15 N.

Die obenstehend beschriebene Härte wurde im Rahmen der vorliegenden Erfindung an einem Apparat der Firma Zwick, Typ BZ2.5/TS1S mit einer Vorkraft von 0,5 N, einer Vorkraftschubgeschwindigkeit von 10 mm/min und einer nachfolgenden Prüfgeschwindigkeit von 1,6 mm/min bestimmt. Das Gerät besaß einen festsitzenden Drehteller und einen frei beweglichen Stempel mit eingebauter Schneide von 0,3 mm Stärke. Der bewegliche Stempel mit der Schneide war mit einer Kraftmessdose zur Kraftaufnahme verbunden und bewegte sich während der Messung gegen den festsitzenden Drehteller hin, auf der der zu untersuchende Katalysatorformkörper lag. Das Prüfgerät wurde über einen Computer gesteuert, der die Messergebnisse registrierte und auswertete. Die erzielten Werte stellen den Mittelwert aus den Messungen zu jeweils 10 Katalysatorformkörpern dar. Die Katalysatorformkörper wiesen eine zylindrische Geometrie auf, wobei ihre mittlere Länge in etwa dem Zwei- bis Dreifachen des Durchmessers entsprach, und wurden dabei mit der Schneide von 0,3 mm Stärke mit zunehmender Kraft solange belastet, bis der Formkörper durchtrennt war. Die Schneide wurde dabei senkrecht zur Längsachse des Formkörpers auf den Formkörper aufgebracht. Die dazu benötigte Kraft ist die Schneidhärte (Einheit N).

Im Rahmen der vorliegenden Erfindung ist es auch denkbar, dass ein erfindungsgemäßer Formkörper ausgehend von dem erfindungsgemäßen Schichtsilikat hergestellt wird. Dieses kann in den oben im Zusammenhang mit der Verwendung des Gerüstsilikates beschriebenen Schritt (I) entweder an Stelle des Gerüstsilikates oder zusammen mit dem Gerüstsilikat eingesetzt werden.

- Dabei ist es zum einen denkbar, dass das Schichtsilikat vor dem Einsatz in (I) wie oben beschrieben aus der Suspension, die aus der hydrothermalen Synthese resultiert, gemäß (3) abgetrennt wird, wobei sich dann, vor dem Einsatz in (I), Waschen und/oder Trocknen gemäß (4)/(5) anschließen können.
- Zum anderen ist es denkbar, dass vor dem Einsatz in (I) das Schichtsilikat nicht abgetrennt wird, sondern die gemäß (2) erhaltene Suspension, enthaltend das Schichtsilikat, als solche oder in aufkonzentrierter Form eingesetzt wird. Diese Verfahrensführung bietet den Vorteil, dass beispielsweise zum Herstellen der verformbaren Masse kein zusätzliches oder weniger Anteigungsmittel, beispielsweise bevorzugt Wasser, eingesetzt werden muss. Sollte im Rahmen der vorliegenden Erfindung solch eine aufkonzentrierte Suspension eingesetzt werden, könnte der Feststoffgehalt dieser Suspension beispielsweise in einem Bereich von 10 bis 50 Gew.-% liegen. Die Aufkonzentrierung kann beispielsweise durch Eindampfen der gemäß (2) erhaltenen Suspension, durch Cross-Flow-Filtration, beispielsweise unter vermindertem Druck, oder durch Teilen der gemäß (2) erhaltenen Suspension, Abtrennen des Schichtsilikates aus einem Teil mit optionalem Trocknen und/oder Waschen, und Suspendieren des abgetrennten Schichtsilikates im verbliebenen Teil der Suspension erfolgen.

Ein denkbarer Vorteil beider Alternativen ist darin zu sehen, dass durch Trocknen und Calcinieren des unter Verwendung des Schichtsilikates hergestellen Formkörpers bei geeigneten Temperaturen das Gerüstsilikat im Formkörper entstehen kann und somit, im Vergleich mit oben beschriebenem Verfahren, ein energieaufwändiger Calcinierungsschritt, nämlich der Calcinierungsschritt zur Herstellung des Gerüstsilikates vor vor dem Einsatz des Silikates in (I), eingespart wird.

Die vorliegende Erfindung und betrifft darüber hinaus die Verwendung der erfindungsgemäßen Schicht- und Gerüstsilikate insbesondere der erfindungsgemäßen Gerüstsilikate und/oder der erfindungsgemäßen Formkörper, als Molekularsieb, Katalysator, Katalysatorträger oder deren Binder, als Adsorptionsmittel, Pigmente, Zusatzstoffe in Waschmitteln, Zusatz zu Baustoffen, zur Thixotropierung in Farbpasten und Lacken, sowie Anwendungen als Gleit- und Schmierstoff, als Flammschutz, Hilfs- und Füllstoff in Papiererzeugnissen, in bakterizid und/oder fungizid und/oder herbizid wirksamen Zusammensetzungen, zum Ionenaustausch, zur Herstellung von Keramiken, in Polymeren, in elektrischen, optischen oder elektrooptischen Bauteilen und Schaltelementen oder Sensoren.

Reaktionen, die durch die erfindungsgemäßen Schicht- und Gerüstsilikate katalysiert werden können, sind beispielsweise Hydrierungen, Dehydrierungen, Oxidehydrierungen, Oxidationen, Epoxidationen, Polymerisationsreaktionen, Aminierungen, Hydratisierungen und Dehydratisierungen, nukleophile und elektrophile Substitutionsreaktionen, Additions- und Eliminationsreaktionen, Doppelbindungs- und Skelettisomerisierungen, Dehydrocyclisierungen, Hydroxylierungen von Heteroaromaten, Epoxid-Aldehydumlagerungen, Metathese, Olefinherstellung aus Methanol, Diels-Alder-Reaktionen, Knüpfung von Kohlenstoff-Kohlenstoff-Bindungen wie beispielsweise der Olefin-Dimerisierung oder Olefin-Trimerisierung sowie Kondensationsreaktionen vom Typ der Aldolkondensationen. Abhängig vom umzusetzenden Molekül können die katalytischen Reaktionen in Gas- oder Flüssigphase oder aber auch in überkritischer Phase durchgeführt werden.

Insbesondere eignen sich die erfindungsgemäßen Schicht- und Gerüstsilikate auch als Molekularsieb. Hierbei kann man vorteilhafterweise die hohe innere Oberfläche des erfindungsgemäßen Materials ausnutzen, um auch Moleküle aufgrund ihres Unterschieds in der Molekülgröße voneinander trennen. Je nach Trennaufgabe kann die jeweilige Adsorption in der Gasphase oder der Flüssigphase oder in überkritischer Phase erfolgen.

In einer ersten Ausführungsform eignen sich die erfindungsgemäßen Schicht- und Gerüstsilikate zur Trennung von Konstitutionsisomeren, beispielsweise zur Trennung von n- und iso-Isomeren kleiner Moleküle. Unter dem Begriff "kleines Molekül" werden im Rahmen der vorliegenden Erfindung Moleküle mit einem kinetischen Durchmesser im Bereich von 3,5 bis 5,5 Å verstanden. Zur Definition des kinetischen Durchmessers sei auf D.W. Breck, Zeolite Molecular Sieves, 1974, J. Wiley, Seiten 634 - 641 verwiesen.

Beispielhaft seien hierfür die Trennung von n- und i-Butan genannt.

In einer zweiten Ausführungsform eignen sich die erfindungsgemäßen Schicht- und Gerüstsilikate zur Trennung von Konfigurationsisomeren, beispielsweise zur Trennung von cis-Buten und trans-Buten.

Gemäß einer dritten Ausführungsform eignen sich die erfindungsgemäßen Schicht- und Gerüstsilikate, insbesondere die Gerüstsilikate und weiter insbesondere die kein Heteroatom enthaltenden Gerüstsilikate zur Trennung von Olefinen in der Flüssigphase. Überraschend wurde gefunden, dass solche Trennungen insbesondere dann erfolgreich durchgeführt werden können, wenn als Lösungsmittel Verbindungen eingesetzt werden, deren kinetischer Durchmesser größer als der oder gleich dem Porendurchmesser des Silikates ist. In diesem Zusammenhang ist etwa t-Butanol zu erwähnen. Weiter bevorzugt sind als Lösungsmittel Alkane oder Alkangemische, wobei Cyclohexan insbesondere bevorzugt ist. Insbesondere für die erwähnten Olefin-Auftrennungen in der Flüssigphase unter Verwendung von Cyclohexan als Lösungsmittel sind als besonders bevorzugte Auftrennungen die Auftrennung von Pentenen und die Auftrennung von Butenen zu nennen, wobei überraschend gefunden wurde, dass in flüssiger Phase in Cyclohexan als Lösungsmittel die Auftrennung von Butenen gegenüber der Auftrennung von Pentenen bevorzugt ist. Besonders bevorzugt ist die Trennung trans-2-Buten / 1-Buten sowie die Trennung trans-2-Buten / Isobuten, ebenso wie die Trennung von trans-2-Penten von 1-Penten.

Daher betrifft die vorliegenden Erfindung die Verwendung eines erfindungsgemöß Schicht- oder Gerüstsilikate , bevorzugt eines erfindungsgemäß hergestellten Gerüstsilikates der Struktur RUB-41, insbesondere eines erfindungsgemäß hergestellten heteroatomfreien Gerüstsilikates der Struktur RUB-41, zur Auftrennung von Olefinen, bevorzugt zur Auftrennung von trans-2-Olefinen und 1-Olefinen, weiter bevorzugt zur Auftrennung von trans-2-Buten und 1-Buten oder trans-2-Penten und 1-Penten, insbesondere von trans-2-Buten und 1-Buten, wobei die Auftrennung der Olefine als Reinstoffe in der Gasphase oder in der Flüssigphase unter Verwendung mindestens eines Lösungsmittels erfolgt, und wobei im Falle der Verwendung mindestens eines Lösungsmittels Alkane und insbesondere Cyclohexan bevorzugt ist.

Als weitere mögliche Verwendung der erfingsgemäßen Schicht- oder Gerüstsilikate, insbesondere der erfindungsgemäß hergestellten Gerüstsilikate, ist der Einsatz als Additiv zu Katalysatoren, beispielsweise USY-Zeoliten, zu nennen, die bei Crack-Prozessen, insbesondere bei Crack-Prozessen in flüssiger Phase verwendet werden. Dabei beschreibt die vorliegende Erfindung in diesem Zusammenhang nicht nur den Einsatz von heteroatomfreien Gerüstsilikaten, sondern auch den Einsatz von Schicht- oder Gerüstsilikaten, die mindestens ein Heteroatom, wie oben beschrieben, enthalten. Insbesondere sind hier beispielsweise AI-RUB-41, B-RUB-41, AI/B-RUB-41 zu nennen. Weiter umfasst die vorliegende Erfindung den teilweisen oder vollständigen Ersatz der üblicherweise bei Crackprozessen, insbesondere bei Crackprozessen in flüssiger Phase als Zusatzstoffe verwendeten ZSM-5-Zeolithe bzw. AI- und/oder B-ZSM-5-Zeolithe durch die erfindungsgemäßen Schicht- oder Gerüstsilikate. Unter anderem ist im Zusammenhang mit den Crack-Prozessen beispielsweise die Herstellung von niederen Olefinen durch katalytisches Cracken zu erwähnen.

Als weitere mögliche Verwendung der erfindungsgemäß Schicht- oder Gerüstsilikate, insbesondere der erfindungsgemäß hergestellten Gerüstsilikate, ist der Einsatz als Washcoat, der auf Monolithe aufgebracht wird und dann, gegebenenfalls weiter beladen mit mindestens einem Edelmetall, als Katalysator eingesetzt wird, wobei hierbei insbesondere bevorzugt beispielsweise Automobilkatalysatoren zu nennen sind, die zur Reduktion von Stickoxiden $NO_x$, Kohlenmonoxid und/oder Kohlenwasserstoffen verwendet werden. Weiter sind 3-Wege-Katalysatoren oder Katalysatoren, die zur Verminderung der Abgase von Dieselmotoren eingesetzt werden, zu nennen.

Ganz allgemein betrifft die vorliegende Erfindung die Verwendung der erfindungsgemäßen Schicht- oder Gerüstsilikate insbesondere der Gerüstsilikate, zur Abtrennung von mindestens einem Alkan und/oder mindestens einem Alken und/oder mindestens einem Alkin aus einem Stoffgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren, wobei das mindestens eine Alkan und/oder mindestens eine Alken und/oder mindestens eine Alkin bis zu 10 C-Atome wie beispielsweise 1 C-Atom im Falle von Methan oder 2, 3, 4, 5, 6, 7, 8, 9 oder 10 C-Atome aufweist.

Bevorzugt betrifft die vorliegende Erfindung die Verwendung der erfindungsgemäßen Schicht- oder Gerüstsilikate insbesondere der Gerüstsilikate, zur Abtrennung von mindestens einem Alkan und/oder mindestens einem Alken und/oder mindestens einem Alkin aus einem Gasgemisch, enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin, insbesondere zur Auftrennung von Konstitutionsisomeren und/oder Konfigurationsisomeren.

Als besonders bevorzugte Einsatzgebiete sind hierbei die Auftrennung von Methan und Ethan oder die Auftrennung von Ethen, Propen und Buten, insbesondere trans-2-Buten, oder die Auftrennung von Butan und Buten oder die Auftrennung von n-Butan und iso-Butan oder die Auftrennung von 1-Buten und trans-2-Buten.

Die erfindungsgemäßen Schicht- oder Gerüstsilikate ermöglichen somit eine einfache Trennung von engsiedenden Stoffgemischen, die durch destillative Verfahren ohne große apparative Vorrichtungen oder ohne zur Hilfenahme von Zusatzstoffen nicht möglich ist. Hierdurch lassen sich Kosten in chemischen Produktionsverfahren reduzieren. In solchen Verfahren wird das erfindungsgemäße Gerüstsilikat als solches oder bevorzugt als Formkörper in mindestens einer geeigneten Vorrichtung wie beispielsweise einem Rohrrektor eingesetzt, durch den kontinuierlich oder diskontinuierlich, bevorzugt kontinuierlich das aufzutrennenden Stoffgemisch geleitet wird.

Demgemäß betrifft die vorliegende Erfindung auch eine Vorrichtung, insbesondere einen Rohrreaktor, enthaltend mindestens ein wie oben beschriebenes Gerüstsilikat und/oder einen wie oben beschriebenen Formkörper zur Auftrennung eines Stoffgemischs, insbesondere zur Abtrennung von mindestens einem Alkan und/oder mindestens einem Alken und/oder mindestens einem Alkin aus einem Gasgemisch enthaltend mindestens zwei Alkane oder mindestens zwei Alkene oder mindestens zwei Alkine oder mindestens ein Alkan und mindestens ein Alken oder mindestens ein Alkan und mindestens ein Alkin oder mindestens ein Alken und mindestens ein Alkin oder mindestens ein Alkan und mindestens ein Alken und mindestens eine Alkin.

Gemäß einer insbesondere bevorzugten Ausführungsform weist ein solcher Rohrreaktor ein Verhältnis von Länge : Breite von größer oder gleich, bevorzugt größer 3 : 1 auf.

Ebenso kann das erfindungsgemäße Schicht- oder Gerüstsilikate, insbesondere das Gerüstsilikat, oder ein Formkörper, der ein erfindungsgemäßes Schicht- oder Gerüstsilikat enthält, beispielsweise

- zur Trennung von Olefin und Kohlendioxid, beispielsweise zur Reinigung von Polyethylen oder Polypropylen,
- oder als Katalysator zur Aminierung, wie beispielsweise zur Herstellung von Methylamin und/oder Dimethylamin aus Methanol und Ammoniak oder aus Synthesegas und Ammonaik, wobei bevorzugt ein geringer Anteil an Trimethylamin erzeugt wird,
- oder für Polymerisationen wie beispielsweise zur Herstellung von Polytetrahydrofuran aus Tetrahydrofuran,
- oder als Hydroxylierungskatalyator wie beispielsweise zur Herstellung von Phenol aus Benzol,
- oder allgemein zu Umsetzungsreaktionen mit 6-Ring-Aromaten,
- oder zur Umsetzung von Cyclohexanon zu Cycolhexanonoxim,
- oder für Beckmann-Umlagerungen wie beispielsweise zur Umsetzung von Cyclohexanonoxim zu Caprolacatam

verwendet werden. Überraschenderweise wurde gefunden, dass das neue Material, insbesondere das neue Gerüstsilikat der Struktur RUB-41, eine sehr hohe Aufnahmefähigkeit für 6-Ring-Aromaten bzw. -Heteroaromaten, insbesondere für Benzol, hat. Demgemäß ist beabsichtigt, das neue Material auch für die Abtrennung von Benzol aus Benzol enthaltenden Gemischen zu verwenden.

Wird das erfindungsgemäße Gerüstsilikat oder der dieses Gerüstsilikat enthaltende Formkörper als Adsorbens, beispielsweise zur Stofftrennung, verwendet, so kann die Desorption der adsorbierten Verbindung oder der adsorbierten Verbindungen entweder durch eine geeignete Reduktion des Drucks und/oder einen geeigneten Temperaturwechsel wie besonders bevorzugt durch eine geeignete Temperaturerhöhung und/oder durch Inkontaktbringen des Gerüstsilikats oder des dieses Gerüstsilikat enthaltenden Formkörpers mit mindestens einer Verbindung, die stärker adsorbiert als die zu desorbierende Verbindung oder zu desorbierenden Verbindungen, bewerkstelligt werden.

Je nach Verwendungsweise des erfindungsgemäßen Gerüstsilikates kann es erforderlich sein, nach einer bestimmten Einsatzzeit das Gerüstsilikat oder den das Gerüstsilikat enthaltenden Formkörper zu regenerieren.

In einer weiteren Ausführungsform des erfindungsgemäßen Verfahrens werden das Gerüstsilikat und/oder die Formkörper nach ihrem Einsatz in dem jeweiligen technischen Gebiet durch ein Verfahren regeneriert, bei dem die Regenerierung durch gezieltes Abbrennen der für die abnehmende Performance verantwortlichen Beläge erfolgt. Dabei wird bevorzugt in einer Inertgasatmosphäre gearbeitet, die genau definierte Mengen an Sauerstoff liefernden Substanzen enthält. Ein solches Regenerierungsverfahren ist unter anderem in der WO 98/55228 und der DE 197 23 949 A1, insbesondere in Spalte 2, Zeilen 33 bis 54 der DE 197 23 949 A1, beschrieben, deren diesbezügliche Offenbarung durch Bezugnahme hiermit vollumfänglich in den Gegenstand der vorliegenden Anmeldung einbezogen wird.

Das zu regenerierende Gerüstsilikat und/oder die Formkörper werden entweder in der Vorrichtung, beispielsweise dem Rohrreaktor, oder in einem externen Ofen in einer Atmosphäre, die 0,1 bis ungefähr 20 Volumen-Anteile von Sauerstoff liefernden Substanzen, besonders bevorzugt 0,1 bis 20 Volumenanteile Sauerstoff, enthält, auf eine Temperatur im Bereich von 250 °C bis 600 °C, vorzugsweise von 400 °C bis 550 °C und insbesondere von 450 °C bis 500 °C aufgeheizt. Dabei wird das Aufheizen vorzugsweise mit einer Aufheizrate von 0,1 °C/min bis 20 °C/min, vorzugsweise von 0,3 °C/min bis 15 °C/min und insbesondere von 0,5 °C/min bis 10 °C/min durchgeführt.

Während dieser Aufheizphase wird bis zu einer Temperatur aufgeheizt, bei der sich die meisten organischen Beläge zu zersetzen beginnen, während gleichzeitig die Temperatur über den Sauerstoffgehalt geregelt wird und somit nicht derart ansteigt, dass es zu Schädigungen der Gerüstsilikat- und/oder Formkörperstruktur kommt. Das langsame Erhöhen der Temperatur bzw. das Verweilen bei niedriger Temperatur durch Einstellen des entsprechenden Sauerstoffgehaltes und der entsprechenden Heizleistung ist bei hohen organischen Beladungen ein wesentlicher Schritt zur Verhinderung einer lokalen Überhitzung des Gerüstsilikats und/oder der Formkörper.

Sinkt die Temperatur des Abgasstroms am Reaktorausgang trotz steigender Mengen an Sauerstoff liefernden Substanzen im Gasstrom, so ist das Abbrennen der organischen Beläge beendet. Die Dauer der Behandlung beträgt im Allgemeinen jeweils 1 bis 30, vorzugsweise ungefähr 2 bis ungefähr 20 und insbesondere ungefähr 3 bis ungefähr 10 Stunden.

Das anschließende Abkühlen des so regenerierten Gerüstsilikats und/oder der Formkörper wird bevorzugt so durchgeführt, dass das Abkühlen nicht zu schnell erfolgt, da sonst die mechanische Festigkeit beispielsweise der Formkörper negativ beeinflusst werden kann.

Es kann erforderlich sein, nach der durchgeführten Regeneration durch Calcinieren, wie oben beschrieben, eine Spülung mit Wasser und/oder verdünnten Säuren wie beispielsweise Salzsäure anzuschließen, um die durch Verunreinigung der Edukte gegebenenfalls verbleibende anorganische Beladung (Alkalispuren etc.) zu entfernen. Anschließend kann eine erneute Trocknung und/oder ein erneutes Calcinieren durchgeführt werden.

Gemäß einer weiteren Ausführungsform des erfindungsgemäßen Verfahrens können das für das jeweilige technische Einsatzgebiet zumindest teilweise deaktivierte Gerüstsilikat und/oder die Formkörper vor dem Aufheizen gemäß der Regenerationsprozedur mit einem Lösungsmittel im Umsetzungsreaktor oder in einem externen Reaktor gewaschen werden, um noch anhaftendes Wertprodukt zu entfernen. Dabei wird das Waschen so durchgeführt, dass zwar die jeweils anhaftenden Wertprodukte entfernt werden können, Temperatur und Druck aber nicht so hoch gewählt werden, dass die meist organischen Beläge ebenfalls entfernt werden. Vorzugsweise wird dabei mit einem geeigneten Lösungsmittel lediglich gespült. Somit eignen sich für diesen Waschvorgang alle Lösungsmittel, in denen sich das jeweilige Wertprodukt gut löst. Die benutzte Menge an Lösungsmittel sowie die Dauer des Waschvorgangs sind nicht kritisch. Der Waschvorgang kann mehrmals wiederholt und bei erhöhter Temperatur durchgeführt werden. Bei Verwendung von $CO_2$ als Lösungsmittel ist überkritischer Druck bevorzugt, ansonsten kann der Waschvorgang unter Normaldruck bzw. erhöhtem oder überkritischem Druck erfolgen. Nach der Beendigung des Waschvorgangs wird im Allgemeinen getrocknet. Obwohl der Trocknungsvorgang im allgemeinen unkritisch ist, sollte die Trocknungstemperatur die Siedetemperatur des zum Waschen verwendeten Lösungsmittels nicht zu stark übersteigen, um ein schlagartiges Verdampfen des Lösungsmittels in den Poren, insbesondere in den Mikroporen zu vermeiden, da auch dies zu Schädigungen der Gitterstruktur führen kann.

Zur Prozessoptimierung können mindestens zwei Vorrichtungen verwendet werden, die jeweils das erfindungsgemäße Gerüstsilikat und/oder die Formkörper enthalten, wobei im Falle der Regeneration mindestens eine Vorrichtung aus dem Betrieb genommen wird und mindestens eine Vorrichtung im Betrieb verbleibt, so dass der Prozess zu keinem Zeitpunkt unterbrochen werden muss.

Die vorliegende Erfindung wird anhand der nachfolgend beschriebenen Beispiele, Abbildungen und Tabellen näher erläutert.

**Beschreibung der Abbildungen**

| | |
|---|---|
| Abbildung 1 | zeigt das Röntgendiffraktogramm des gemäß Beispiel 1 erhaltenen getrockneten Schichtsilikates der Struktur RUB-39. Das Pulverröntgendiffraktogramm wurde auf einem Siemens D-5000 mit monochromatischer Cu K alpha-1-Strahlung aufgenommen, wobei ein Kapillarprobenhalter zur Vermeidung einer bevorzugten Orientierung verwendet wurde. Die Diffraktionsdaten wurden mit einem positionssensitiven Detektor von Braun im Bereich von 8 bis 96 °(2Theta) und einer Schrittweite von 0,0678 ° gesammelt. Indizierung des Pulverdiagramms erfolgte mit dem Programm Treor90, implementiert in powder-X (Treor90 ist ein public domain-Programm, die frei zugänglich ist über die URL http://www.ch.iucr.org/sincris-top/logiciel/). In der Abbildung ist auf der Rechtswertachse der Winkel 2Theta in ° angegeben, auf der Hochwertachse sind die Intensitäten aufgetragen. |
| Abbildung 2 | zeigt das Röntgendiffraktogramm des gemäß Beispiel 2 erhaltenen getrockneten Schichtsilikates der Struktur RUB-39. Zur Messmethodik wird auf die Ausführungen zu Abbildung 1 verwiesen. |
| Abbildung 3 | zeigt das Röntgendiffraktogramm des gemäß Beispiel 3 erhaltenen getrockneten Schichtsilikates der Struktur RUB-39. Zur Messmethodik wird auf die Ausführungen zu Abbildung 1 verwiesen. |
| Abbildung 4 | zeigt das Röntgendiffraktogramm des gemäß Beispiel 5 erhaltenen Gerüstsilikates der Struktur RUB-41. Zur Durchführung der Messung wird auf Beispiel 5 verwiesen, ergänzend auf die Ausführungen zu Abbildung 1. |
| Abbildung 5 | zeigt das Röntgendiffraktogramm des gemäß Beispiel 6 erhaltenen getrockneten Schichtsilikates der Struktur Al-RUB-39, hergestellt unter Zugabe von NaOH. Zur Messmethodik wird auf die Ausführungen zu Abbildung 1 verwiesen. |
| Abbildung 6 | zeigt das Röntgendiffraktogramm des gemäß Beispiel 6 erhaltenen getrockneten Schichtsilikates der Struktur Al-RUB-39, hergestellt unter Zugabe von NaCl. Zur Messmethodik wird auf die Ausführungen |

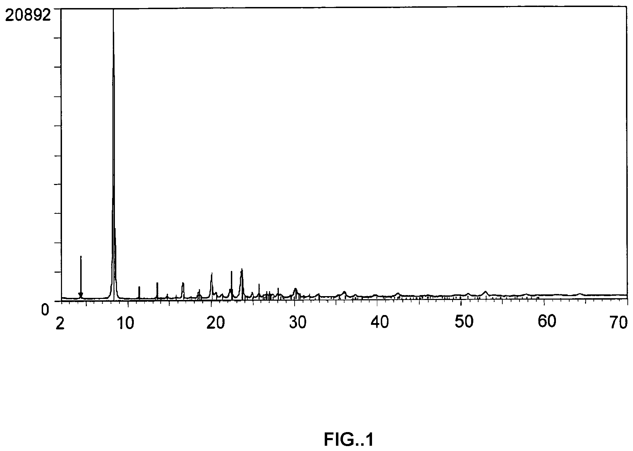

zu Abbildung 1 verwiesen.

Abbildung 7    zeigt das Röntgendiffraktogramm des gemäß Beispiel 6 erhaltenen calcinierten Gerüstsilikates der Struktur AI-RUB-41. Zur Messmethodik wird auf die Ausführungen zu Abbildung 1 verwiesen.

Abbildung 8    zeigt das Röntgendiffraktogramm eines Schichtsilikates der Struktur AI-RUB-39, das Verunreinigungen mit ZSM-5-Phase aufweist. Zur Messmethodik wird auf die Ausführungen zu Abbildung 1 verwiesen.

**Beispiele:**

**Beispiel 1: Herstellung eines Schichtsilikates vom Strukturtyp RUB-39**

In einem Becherglas wurden Aerosil 200 (pyrogene Kieselsäure, 1,22 mol, 97,7 g) mit Dimethyldipropylammoniumhydroxid (716,9 g, 0,81 mol, 16,7 Gew.-%ige wässrige Lösung, Fa. Sachem) verrührt. Anschließen wurden Impfkristalle eines Silikates (Zeolith mit Struktur RUB-39; 2,0 g) zugegeben. Das entstandene Sol wurde 1h gerührt und danach am Rotationsverdampfer unter Vakuum bei 70 °C auf 510 g eingeengt. Das Sol wurde dann auf 3 Autoklavenbecher (LAB1 (166 g), LAB 2 (154 g) und LAB3 (154 g)) verteilt.
Die Kristallisation wurde jeweils bei 150 °C durchgeführt, wobei die Kristallisationszeit in LAB 1 für einen Zeitraum von 84 h, in LAB 2 von 180 h und in LAB 3 von 252 h betrug.
Aus LAB 1 bis LAB 3 wurde jeweils nach Ausbau eine weiße Suspension erhalten. Der jeweilige weiße Niederschlag wurde aus den Suspensionen durch Zentrifugieren abgetrennt und mit Wasser gewaschen. Anschließend wurde jeweils für 24 h bei 120 °C getrocknet. Es wurde in jedem Fall ein weißes Pulver erhalten.
Die Auswaage aus LAB 1 betrug 19,9 g, entsprechend einer Ausbeute von 48 %, bezogen auf das eingesetzte $SiO_2$.
Die Auswaage aus LAB 2 betrug 26,4 g, entsprechend einer Ausbeute von 69 %, bezogen auf das eingesetzte $SiO_2$.
Die Auswaage aus LAB 3 betrug 30,2 g, entsprechend einer Ausbeute von 79 %, bezogen auf das eingesetzte $SiO_2$.
In Abbildung 1 ist das Röntgendiffraktogramm des erhaltenen Schichtsilikates gezeigt. Daraus wird deutlich, dass es sich bei dem Silikat um ein reines RUB-39-Silikat handelt.

**Beispiel 2: Herstellung eines Schichtsilikates vom Strukturtyp RUB-39**

In einem Becherglas wurden Aerosil 200 (pyrogene Kieselsäure, 0,34 mol, 20,4 g) mit Dimethyldipropylammoniumhydroxid (149,6 g, 0,17 mol, 16,7 Gew.-%ige wässrige Lösung, Fa. Sachem) verrührt. Anschließen wurden Impfkristalle eines Silikates (Zeolith mit Struktur RUB-39; 0,4 g) zugegeben. Das entstandene Sol wurde 2 h gerührt und dann ohne Aufkonzentrierungen in einen Autoklavenbecher (LAB 1) gegeben.
Die Kristallisation wurde bei 150 °C durchgeführt, wobei die Kristallisationszeit 120 h betrug.
Aus LAB 1 wurde nach Ausbau eine weiße Suspension erhalten. Der weiße Niederschlag wurde aus der Suspension durch Zentrifugieren abgetrennt und mit Wasser gewaschen. Anschließend wurde für 24 h bei 120 °C getrocknet. Es wurde ein weißes Pulver erhalten.
Die Auswaage aus LAB 1 betrug 14,6 g, entsprechend einer Ausbeute von 53 %, bezogen auf das eingesetzte $SiO_2$.

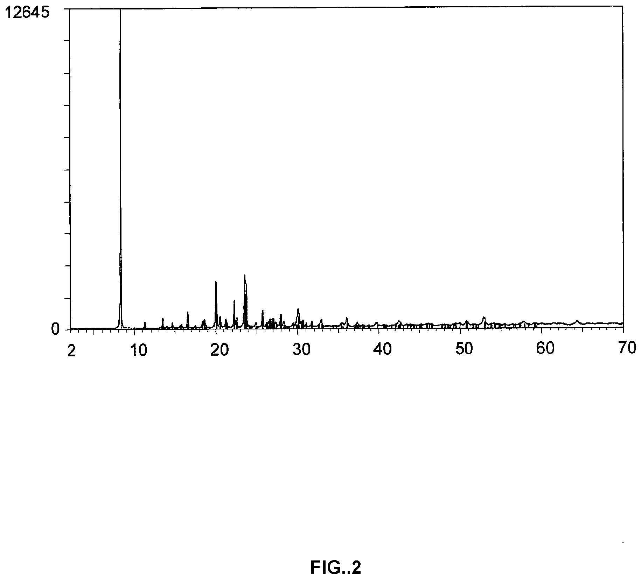

In Abbildung 2 ist das Röntgendiffraktogramm des erhaltenen Schichtsilikates gezeigt. Daraus wird deutlich, dass es sich bei dem Silikat um ein reines RUB-39-Silikat handelt.

**Beispiel 3: Herstellung eines Schichtsilikates vom Strukturtyp RUB-39**

In einem Becherglas wurden Aerosil 200 (pyrogene Kieselsäure, 3,4 mol, 204 g) mit Dimethyldipropylammoniumhydroxid (1496,0 g, 1,7 mol, 16,7 Gew.-%ige wässrige Lösung, Fa. Sachem) verrührt. Anschließen wurden Impfkristalle eines Silikates (Zeolith mit Struktur RUB-39; 4,0 g) zugegeben. Das entstandene Sol wurde 2 h gerührt und dann ohne Aufkonzentrierungen in einen Autoklavenbecher (LAB 1) gegeben.
Die Kristallisation wurde bei 150 °C durchgeführt, wobei die Kristallisationszeit 192 h betrug.
Aus LAB 1 wurde nach Ausbau eine weiße Suspension erhalten. Der weiße Niederschlag wurde aus der Suspension durch Zentrifugieren abgetrennt und mit Wasser gewaschen. Anschließend wurde für 24 h bei 120 °C getrocknet. Es wurde ein weißes Pulver erhalten.
Die Auswaage aus LAB 1 betrug 147,8 g, entsprechend einer Ausbeute von 54 %, bezogen auf das eingesetzte $SiO_2$.

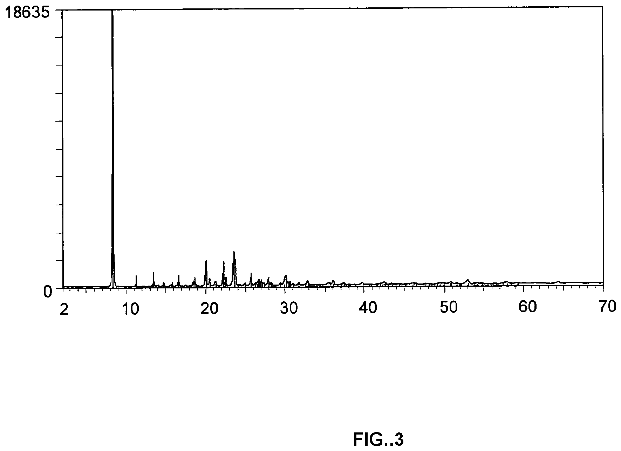

In Abbildung 3 ist das Röntgendiffraktogramm des erhaltenen Schichtsilikates gezeigt. Daraus wird deutlich, dass es sich bei dem Silikat um ein reines RUB-39-Silikat handelt.

**Beispiel 4: Herstellung eines Schichtsilikates vom Strukturtyp RUB-39 ohne Zusatz von Kristallisationshilfsmittel (Vergleichsbeispiel)**

In einem Becherglas wurden Cab-o-Sil M7D (pyrogene Kieselsäure, 1,08 mol, 65,1 g) mit Dimethyldipropyl-ammoniumhydroxid (477,9 g, 0,54 mol, 16,7 Gew.-%ige wässrige Lösung, Fa. Sachem) verrührt. Es wurden keine Impfkristalle eines Silikates zugegeben. Das entstandene Sol wurde am Rotationsverdampfer unter Vakuum bei 70 °C auf 340 g eingeengt und dann in etwa gleichmäßig auf zwei Autoklavenbecher (LAB 1 und LAB 2) verteilt.

Die Kristallisation wurde bei 175 °C durchgeführt, wobei die Kristallisationszeit 720 h betrug.

Aus LAB 1 und LAB 2 wurde nach Ausbau jeweils eine weiße Suspension erhalten. Der weiße Niederschlag wurde aus der jeweiligen Suspension durch Zentrifugieren abgetrennt und mit Wasser gewaschen. Anschließend wurde jeweils für 24 h bei 120 °C getrocknet. Es wurde jeweils ein weißes Pulver erhalten.

Die Auswaage aus LAB 1 betrug 24,8 g, entsprechend einer Ausbeute von 28 %, bezogen auf das eingesetzte $SiO_2$.

Die Auswaage aus LAB 2 betrug 28,3 g, entsprechend einer Ausbeute von 33 %, bezogen auf das eingesetzte $SiO_2$.

Es handelt sich bei Silikat jeweils um ein reines RUB-39-Silikat.

Dieses Beispiel zeigt, dass im Vergleich zu den erfindungsgemäßen Beispielen 1 bis 3 trotz höherer Kristallisationstemperatur und erheblich längerer Kristallisationszeit (30 d) die erzielte Ausbeute deutlich geringer ist. Das macht das erfindungsgemäße Verfahren gerade für industrielle oder großindustrielle Verfahrensführungen vorteilhaft.

**Beispiel 5: Herstellung eines Gerüstsilikates vom Strukturtyp RUB-41 aus einem Schichtsilikat vom Strukturtyp RUB-39**

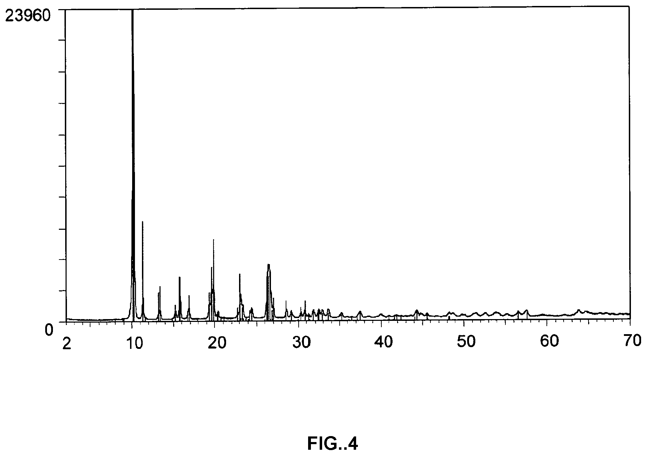

Eine Probe (16,5 g) des getrockneten Silikatpulvers der Struktur RUB-39, erhalten gemäß Beispiel 3 wurde mit einer Rate von 1 °C / min in einer "in-situ" XRD-Kamera unter Luft stufenweise auf eine Temperatur von 500°C gebracht. Abhängig von der Temperatur zeigte sich das in Abbildung 4 angegebene Diffraktogramm, welches die Umwandlung von RUB-39 nach RUB-41 ab einer Temperatur von ca. 225°C belegt.

**Beispiel 6: Herstellung eines Schichtsilikates vom Strukturtyp Al-RUB-39 und des entsprechenden Gerüstsilikates vom Strukturtyp Al-RUB-41**

0,066 g NaAlO2 wurden mit 10, 6 g DMDPAH vermischt. Dieser Mischung wurden 0,05 g NaOH und 0,5 g Impfkristalle eines Silikates vom Strukturtyp RUB-39 zugegeben. Nach Rühren wurde ein homogenes Gel erhalten, das mit 1.44 g Aerosil 200 (pyrogene Kieselsäure) vermischt wurde. Die Mischung wurde dann bei 70 °C eingeengt, so dass die Mischung in etwa die folgenden molaren Verhältnisse aufwies:

$SiO_2$: 0,5 DMDPAH : 1/30 NaAlO2 : 0,05 NaOH : 8 $H_2O$

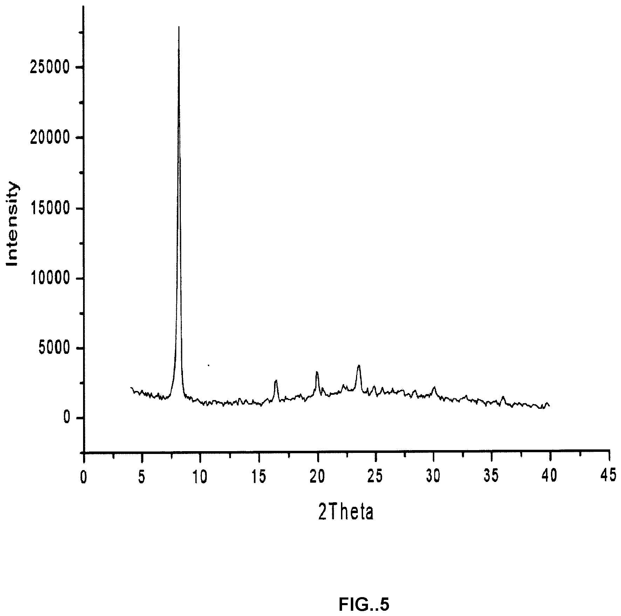

Anschließend wurde die Mischung in einen Autoklaven überführt und für eine Zeit von 8 Tagen bei 140 °C kristallisiert, durch Filtration abgetrennt und bei 110 °C getrocknet. Es wurde ein Schichtsilikat vom Typ Al-RUB-39 erhalten, dessen Röntgendiffraktogramm in Abbildung 5 gezeigt wird. Der Versuch wurde in identischer Weise wiederholt, wobei statt NaOH als Natriumquelle NaCl in einer Menge verwendet wurde, so dass die zur hydrothermalen Kristallisation anstehende Mischung die molare Zusammensetzung hatte:

$SiO_2$: 0,5 DMDPAH : 1/30 NaAlO2 : 0,05 NaCl : 8 $H_2O$

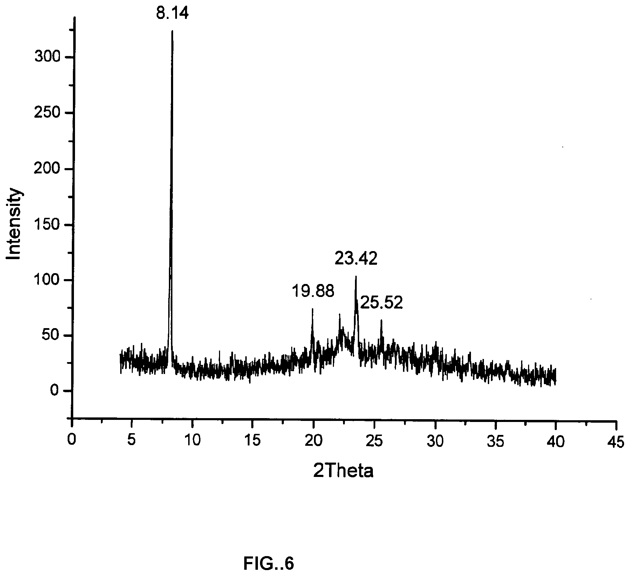

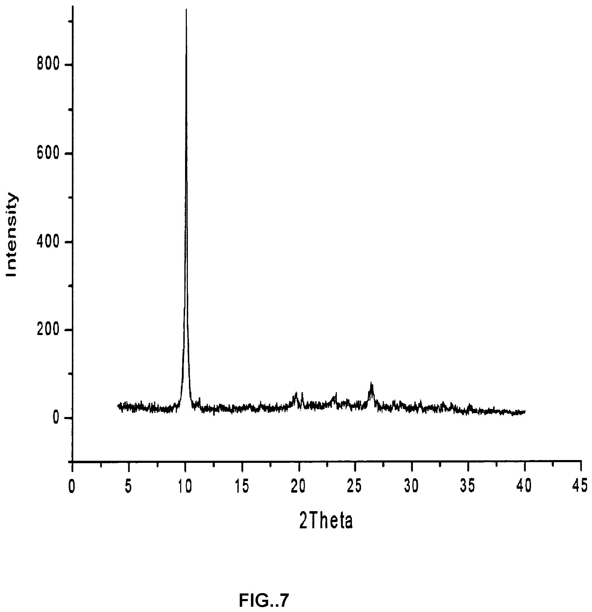

Anschließend wurde die Mischung in einen Autoklaven überführt und für eine Zeit von 8 Tagen bei 140 °C kristallisiert, durch Filtration abgetrennt und bei 110 °C getrocknet. Es wurde ein Schichtsilikat vom Typ Al-RUB-39 erhalten, dessen Röntgendiffraktogramm in Abbildung 6 gezeigt wird. Das unter Verwendung von NaOH hergestellte Schichtsilikat vom Typ Al-RUB-39 wurde für 3 h bei 600 °C calciniert, wodurch ein Gerüstsilikat vom Strukturtyp Al-RUB-41 erhalten wurde. Das Röntgendiffraktogramm des derart erhaltenen Gerüstsilikates wird in Abbildung 7 gezeigt.

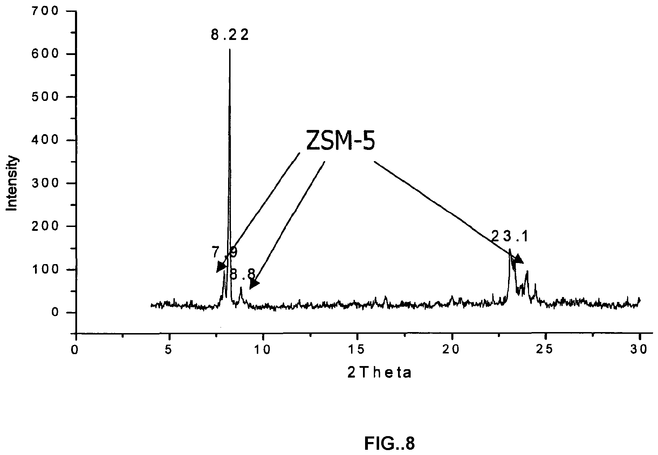

Es wurde gefunden, dass durch dieses Verfahren ein weitestgehend ZSM-5-freier Al-RUB-39 erhalten werden konnte. In diesem Zusammenhang sei auf den Vergleich mit einem ZSM-5-verunreinigten Al-RUB-39 gemäß Abbildung 8 verwiesen.

Sämtliche Versuche wurden fünfmal wiederholt, wobei die Ergebnisse jeweils reproduziert werden konnten.

Referenzbeispiel 7: **Herstellung eines Schichtsilikates vom Strukturtyp B-RUB-39**

Gemäß der folgenden Tabelle wurden Versuche zur Herstellung von B-RUB-39 unter Verwendung von RUB-39-Kristallen als Kristallisationshilfsmittel durchgeführt. In sämtlichen Fällen wurde B-RUB-39 erhalten, der im wesentlichen frei von ZSM-5-Phase war:

| Si-Gel / mol SiO$_2$ | DMDPAH / mol | Wasser / mol | H$_3$BO$_3$ / mol | Kristallisationstemp. / °C | Kristallisationszeit / d |
|---|---|---|---|---|---|
| 0,0194 | 0,01 | 0,20 | 0,0006 | 150 | 14 (nicht erfindungsgemäß) |
| 0,0192 | 0,01 | 0,20 | 0,0008 | 150 | 13 (nicht erfindungsgemäß) |
| 0,019 | 0,01 | 0,20 | 0,001 | 150 | 13 (nicht erfindungsgemäß) |
| 0,0192 | 0,01 | 0,02 | 0,0008 | 150 | 13 (nicht erfindungsgemäß) |
| 0,0192 | 0,01 | 0,02 | 0,0008 | 150 | 7 (erfindungsgemäß) |
| < (erfindungsgemäß) > <br> << (nicht erfindungsgemäß) >> | | | | | |

**Beispiel 8: Auftrennung von Olefinen in flüssiger Phase unter Verwendung eines heteroatomfreien Gerüstsilikates der Struktur RUB-41 ("allsilica RUB-41")**

Zu 40 mg RUB-41 gemäß Beispiel 5 sowie Silicalit und Ferrierit wurden in einem Chromatographiefläschchen ("chromatographic vial") in etwa 1.1 ml Cyclohexanlösung, enthaltend trans-2-Buten und 1-Buten, gegeben. Diese Lösung enthielt in etwa 0,5 Gew.-% eines jeden Butens. Um das Entweichen der Butene zu vermeiden, wurde das Fläschchen vollständig gefüllt. Nach Equilibrierung über Nacht wurde die überstehende Flüssigkeit in das GC injiziert. Die Analyse wurde verglichen mit der Analyse einer identischen Lösung in einem identischen Fläschchen, das keinen RUB-41 bzw. Silicalit bzw. Ferrierit enthielt.

Der Trennfaktor alpha wurde bestimmt gemäß der folgenden Gleichung:

$$\text{alpha} = [(m_{\text{t-2-Buten, Zeolith}}) / (m_{\text{1-Buten, Zeolith}})] / [(m_{\text{t-2-Buten, Flüssigphase}}) / (m_{\text{1-Buten, Flüssigphase}})]$$

Folgende Ergebnisse wurden erhalten:

| Zeolith | m$_{Olefin}$ angeboten / g/g Zeolith | | Aufnahme$_{Olefin}$ / g/g Zeolith | | Aufnahme (%) (t-2-Buten) | Aufnahme (%) (1-Buten) | alpha |
|---|---|---|---|---|---|---|---|
| | t-2-Buten | 1-Buten | t-2-Buten | 1-Buten | | | |
| RUB-41 | 0,149 | 0,086 | 0,031 | 0,001 | 21 | 1 | 18 |
| | 0,083 | 0,047 | 0,019 | 0,002 | 23 | 5 | 5 |
| Ferrierit | 0,155 | 0,089 | 0,024 | 0,001 | 15 | 2 | 14 |
| | 0,082 | 0,044 | 0,031 | 0,005 | 38 | 11 | 4.9 |
| Silicalit | 0,134 | 0,074 | 0,041 | 0,020 | 30 | 26 | 1.2 |

Die Ergebnisse zeigen deutlich, dass von den 3 getesteten Zeolithen der erfindungsgemäß hergestellte heteroatomfreie RUB-41 bei vergleichbarer angebotener Menge an Olefin die beste Trennwirkung bei der Auftrennung von trans-2-Buten und 1-Buten aufweist.

**Patentansprüche**

1. Schichtsilikat, erhältlich durch ein Verfahren umfassend

(1) Mischen von Siliciumdioxid und/oder eines Siliciumdioxid-Precursors mit einer wässrigen Lösung, enthaltend mindestens eine R$_1$R$_2$R$_3$R$_4$N$^+$ umfassende Tetraalkylammoniumverbindung und mindestens eine Base, wobei

$R_1$ und $R_2$ gleich Methyl und sowohl $R_3$ als auch $R_4$ gleich n-Propyl sind;

(2) Erwärmen der unter (1) erhaltenen kolloidalen Lösung auf eine Temperatur im Bereich von grösser der unter dem gewählten Druck vorliegenden Siedetemperatur der kolloidalen Lösung bis 180 °C bei Normaldruck unter Erhalt einer mindestens ein Schichtsilikat enthaltenden Suspension,

**dadurch gekennzeichnet, dass** als Kristallisationshilfsmittel in (1) das mindestens Silicium und Sauerstoff enthaltende, nach der Abtrennung aus der gemäß (2) erhaltenen Suspension resultierende Schichtsilikat zugegeben wird, wobei die gemäß (1) erhaltene kolloidale Lösung gemäß (2) für einen Zeitraum im Bereich von 12 h bis 260 h erwärmt wird, und

wobei das Schichtsilikat mindestens die folgenden Reflexe enthält:

| Intensität (%) | Beugungswinkel $2\theta$ / ° [Cu K(alpha 1)] |
|---|---|
| 100 | 8,0 - 8,4 |
| 11 - 21 | 11,0 - 11,4 |
| 13 - 23 | 13,2 - 13,6 |
| 5 - 15 | 18,0 - 18,4 |
| 7 - 17 | 18,4 - 18,8 |
| 19-29 | 19,9 - 20,0 |

wobei sich die Angabe 100 % auf die Intensität des höchsten Peaks im Röntgendiffraktogramm bezieht.

2. Schichtsilikat nach Anspruch 1, **dadurch gekennzeichnet, dass** in (1) das Schichtsilikat, bezogen auf Siliciumdioxid und/oder auf im Siliciumdioxid-Precursor enthaltenes Siliciumdioxid, in einer Menge von 0.1 bis 5 Gew.-% zugegeben wird.

3. Schichtsilikat nach Anspruch 1 oder 2, **dadurch gekennzeichnet, dass** die gemäß (1) entstandene Mischung vor dem Erwärmen gemäß (2) aufkonzentriert wird.

4. Schichtsilikat nach einem der Ansprüche 1 bis 3, **dadurch gekennzeichnet, dass** die mindestens eine $R_1R_2R_3R_4N^+$ umfassende Tetraalkylammoniumverbindung ein basisches Anion, bevorzugt ein Hydroxidion, enthält.

5. Schichtsilikat nach einem der Ansprüche 1 bis 4, **dadurch gekennzeichnet, dass** die gemäß (1) eingesetzte wässrige Lösung Dimethyldipropylammoniumhydroxid (DMDPAH) enthält.

6. Schichtsilikat nach einem der Ansprüche 1 bis 5, **dadurch gekennzeichnet, dass** die gemäß (1) erhaltene kolloidale Lösung $SiO_2$, DMDPAH und Wasser in den Gewichtsverhältnissen $SiO_2$ : DMDPAH : Wasser im Bereich von 1 : (0,4-10) : (4-12) enthält.

7. Schichtsilikat nach einem der Ansprüche 1 bis 6, **dadurch gekennzeichnet, dass** die gemäß (1) erhaltene kolloidale Lösung $SiO_2$, DMDPAH und Wasser in den Gewichtsverhältnissen $SiO_2$: DMDPAH : Wasser gleich 1 : (0,4-2) : (4-8) enthält.

8. Schichtsilikat nach einem der Ansprüche 1 bis 6, **dadurch gekennzeichnet, dass** die gemäß (1) erhaltene kolloidale Lösung $SiO_2$, DMDPAH und Wasser in den Gewichtsverhältnissen $SiO_2$: DMDPAH : Wasser gleich 1 : (0,45-0,55) : (8-12) enthält.

9. Schichtsilikat nach einem der Ansprüche 1 bis 8, **dadurch gekennzeichnet, dass** die gemäß (1) erhaltene kolloidale Lösung, gegebenenfalls nach Aufkonzentrieren wie in Anspruch 3 definiert, gemäß (2) in einem Autoklaven auf eine Temperatur von 100 bis 180 °C erwärmt wird.

10. Schichtsilikat nach einem der Ansprüche 1 bis 9, **dadurch gekennzeichnet, dass** gemäß (1) amorphes Siliciumdioxid eingesetzt wird.

11. Schichtsilikat nach einem der Ansprüche 1 bis 10, wobei gemäß (1) zusätzlich eine Aluminium-, Bor-, Eisen-, Titan-,

Zinn-, Germanium-, Zirkon-, Vanadium und/oder Niob-Quelle eingesetzt wird.

12. Schichtsilikat nach einem der Ansprüche 1 bis 11, zusätzlich umfassend (3) Abtrennung des mindestens einen Schichtsilikats aus der gemäß (2) erhaltenen Suspension.

13. Schichtsilikat nach Anspruch 12, zusätzlich umfassend

    (4) Waschen und/oder
    (5) Trocknen des gemäß (3) erhaltenen Schichtsilikats.

14. Schichtsilikat nach Anspruch 13, wobei das Schichtsilikat gemäß (4) mit Wasser gewaschen und/oder gemäß (5) bei einer Temperatur im Bereich von Raumtemperatur bis 150 °C getrocknet wird.

15. Gerüstsilikat erhältlich durch ein Verfahren umfassend

    (1) Mischen von Siliciumdioxid und/oder eines Siliciumdioxid-Precursors mit einer wässrigen Lösung, enthaltend mindestens eine $R_1R_2R_3R_4N^+$ umfassende Tetraalkylammoniumverbindung und mindestens eine Base, wobei $R_1$ und $R_2$ gleich Methyl und sowohl $R_3$ als auch $R_4$ gleich n-Propyl sind;
    (2) Erwärmen der unter (1) erhaltenen kolloidalen Lösung auf eine Temperatur im Bereich von grösser der unter dem gewählten Druck vorliegenden Siedetemperatur der kolloidalen Lösung bis 180 °C bei Normaldruck unter Erhalt einer mindestens ein Schichtsilikat enthaltenden Suspension,

    **dadurch gekennzeichnet, dass** als Kristallisationshilfsmittel in (1) das mindestens Silicium und Sauerstoff enthaltende, nach der Abtrennung aus der gemäß (2) erhaltenen Suspension resultierende Schichtsilikat zugegeben wird, wobei die gemäß (1) erhaltene kolloidale Lösung gemäß (2) für einen Zeitraum im Bereich von 12 h bis 260 h erwärmt wird, und zusätzlich umfassend
    (6) Calcinieren des gemäß (2) erhaltenen Schichtsilikates unter Erhalt eines Gerüstsilikates,
    wobei das Gerüstsilikat mindestens die folgenden Reflexe enthält:

| Intensität (%) | Beugungswinkel 2θ /° [Cu K(alpha 1)] |
|---|---|
| 100 | 9,8 - 10,2 |
| 24-34 | 11,0 - 11,4 |
| 9 - 19 | 15,5 - 15,9 |
| 12-22 | 19,4 - 19,6 |
| 12-22 | 19,6- 19,8 |

    wobei sich die Angabe 100 % auf die Intensität des höchsten Peaks im Röntgendiffraktogramm bezieht.

16. Gerüstsilikat nach Anspruch 15, **dadurch gekennzeichnet, dass** die Calcinierung bei einer Temperatur im Bereich von 300 bis 600 °C erfolgt.

17. Formkörper, enthaltend mindestens ein Gerüstsilikat gemäß Anspruch 15.

18. Verfahren zur Herstellung eines Formkörpers, umfassend

    (I) Herstellen eines Gemischs, enthaltend ein Gerüstsilikat, wie in Anspruch 15 definiert, und mindestens ein Bindemittel;
    (II) Kneten des Gemischs;
    (III) Verformen des gekneteten Gemischs unter Erhalt mindestens eines Formkörpers;
    (IV) Trocknen des mindestens einen Formkörpers;
    (V) Calcinieren des mindestens einen getrockneten Formkörpers.

19. Verwendung eines Gerüstsilikates gemäß Anspruch 15 oder 16 oder eines Formkörpers gemäß Anspruch 17 zur Auftrennung von trans-2-Olefinen und 1-Olefinen, bevorzugt von trans-2-Buten und 1-Buten, in flüssiger Phase unter Verwendung eines Alkans als Lösungsmittel, bevorzugt unter Verwendung von Cyclohexan als Lösungsmittel.

**Claims**

1. A sheet silicate obtainable by a process comprising

   (1) mixing silicon dioxide and/or a silicon dioxide precursor with an aqueous solution comprising at least one tetraalkylammonium compound comprising $R_1R_2R_3R_4N^+$ and at least one base, where $R_1$ and $R_2$ are each methyl and both $R_3$ and $R_4$ are n-propyl;
   (2) heating the colloidal solution obtained under (1) to a temperature in the range from greater than the boiling temperature of the colloidal solution present under the selected pressure to 180°C at standard pressure to obtain a suspension comprising at least one sheet silicate,

   which comprises adding, as a crystallizing aid in (1), the at least silicon- and oxygen-comprising sheet silicate which results after the removal from the suspension obtained in (2), the colloidal solution obtained in (1) being heated in (2) for a period in the range from 12 h to 260 h, and wherein the sheet silicate comprises at least the following reflections:

   | Intensity (%) | Diffraction angle $2\theta/°$ [Cu K(alpha 1)] |
   |---|---|
   | 100 | 8.0-8.4 |
   | 11-21 | 11.0-11.4 |
   | 13-23 | 13.2-13.6 |
   | 5-15 | 18.0-18.4 |
   | 7-17 | 18.4-18.8 |
   | 19-29 | 19.9-20.0 |

   where the figure 100% relates to the intensity of the highest peak in the X-ray diffractogram.

2. The sheet silicate according to claim 1, wherein the sheet silicate is added in (1), based on silicon dioxide and/or silicon dioxide present in the silicon dioxide precursor, in an amount of 0.1% to 5% by weight.

3. The sheet silicate according to claim 1 or 2, wherein the mixture formed in (1) is concentrated prior to the heating in (2).

4. The sheet silicate according to any of claims 1 to 3, wherein the at least one tetraalkylammonium compound comprising $R_1R_2R_3R_4N^+$ comprises a basic anion, preferably a hydroxide ion.

5. The sheet silicate according to any of claims 1 to 4, wherein the aqueous solution used in (1) comprises dimethyldipropylammonium hydroxide (DMDPAH).

6. The sheet silicate according to any of claims 1 to 5, wherein the colloidal solution obtained in (1) comprises $SiO_2$, DMDPAH and water in the $SiO_2$:DMDPAH:water weight ratios in the region of 1:(0.4-10):(4-12).

7. The sheet silicate according to any of claims 1 to 6, wherein the colloidal solution obtained in (1) comprises $SiO_2$, DMDPAH and water in the $SiO_2$:DMDPAH:water weight ratios of 1:(0.4-2):(4-8).

8. The sheet silicate according to any of claims 1 to 6, wherein the colloidal solution obtained in (1) comprises $SiO_2$, DMDPAH and water in the $SiO_2$:DMDPAH:water weight ratios of 1:(0.45-0.55):(8-12).

9. The sheet silicate according to any of claims 1 to 8, wherein the colloidal solution obtained in (1), optionally after concentration as defined in claim 3, is heated in (2) to a temperature of 100 to 180°C in an autoclave.

10. The sheet silicate according to any of claims 1 to 9, wherein amorphous silicon dioxide is used in (1).

11. The sheet silicate according to any of claims 1 to 10, where an aluminum, boron, iron, titanium, tin, germanium, zirconium, vanadium and/or niobium source is additionally used in (1).

**12.** The sheet silicate according to any of claims 1 to 11, additionally comprising

(3) removing the at least one sheet silicate from the suspension obtained in (2).

**13.** The sheet silicate according to claim 12, additionally comprising

(4) washing and/or

(5) drying the sheet silicate obtained in (3).

**14.** The sheet silicate according to claim 13, wherein the sheet silicate is washed with water in (4) and/or dried at a temperature in the range from room temperature to 150°C in (5).

**15.** A framework silicate obtainable by a process comprising

(1) mixing silicon dioxide and/or a silicon dioxide precursor with an aqueous solution comprising at least one tetraalkylammonium compound comprising $R_1R_2R_3R_4N^+$ and at least one base, where $R_1$ and $R_2$ are each methyl and both $R_3$ and $R_4$ are n-propyl;

(2) heating the colloidal solution obtained under (1) to a temperature in the range from greater than the boiling temperature of the colloidal solution present under the selected pressure to 180°C at standard pressure to obtain a suspension comprising at least one sheet silicate,

which comprises adding, as a crystallizing aid in (1), the at least silicon- and oxygen-comprising sheet silicate which results after the removal from the suspension obtained in (2), the colloidal solution obtained in (1) being heated in (2) for a period in the range from 12 h to 260 h, and additionally comprising

(6) calcining the sheet silicate obtained in (2) to obtain a framework silicate, wherein the framework silicate comprises at least the following reflections:

| Intensity (%) | Diffraction angle $2\theta/°$ [Cu K(alpha 1)] |
|---|---|
| 100 | 9.8-10.2 |
| 24-34 | 11.0-11.4 |
| 9-19 | 15.5-15.9 |
| 12-22 | 19.4-19.6 |
| 12-22 | 19.6-19.8 |

where the figure 100% relates to the intensity of the highest peak in the X-ray diffractogram.

**16.** The framework silicate according to claim 15, wherein the calcining is effected at a temperature in the range from 300 to 600°C.

**17.** A shaped body comprising at least one framework silicate according to claim 15.

**18.** A process for producing a shaped body, comprising

(I) producing a mixture, comprising a framework silicate as defined in claim 15 and at least one binder;

(II) kneading the mixture;

(III) shaping the kneaded mixture to obtain at least one shaped body;

(IV) drying the at least one shaped body;

(V) calcining the at least one dried shaped body.

**19.** The use of a framework silicate according to claim 15 or 16 or of a shaped body according to claim 17 for separating trans-2-olefins and 1-olefins, preferably of trans-2-butene and 1-butene, in liquid phase using an alkane as solvent, preferably using cyclohexane as solvent.

**Revendications**

1. Silicate stratifié, pouvant être obtenu par un procédé comprenant

   (1) le mélange de dioxyde de silicium et/ou d'un précurseur de dioxyde de silicium avec une solution aqueuse, contenant au moins un composé de type tétraalkylammonium comprenant $R_1R_2R_3R_4N^+$ et au moins une base, $R_1$ et $R_2$ étant méthyle et aussi bien $R_3$ qu'également $R_4$ étant n-propyle ;
   (2) le chauffage de la solution colloïdale obtenue en (1) à une température dans une plage allant de supérieure à la température d'ébullition présente à la pression choisie de la solution colloïdale jusqu'à 180 °C à pression normale avec obtention d'une suspension contenant au moins un silicate stratifié,

   **caractérisé en ce qu'**en tant qu'auxiliaire de cristallisation en (1), le silicate stratifié contenant au moins du silicium et de l'oxygène, obtenu après la séparation de la suspension obtenue selon (2), est ajouté, la solution colloïdale obtenue selon (1) étant chauffée selon (2) pour une durée dans une plage de 12 h à 260 h, et

   le silicate stratifié contenant au moins les réflexions suivantes :

   | intensité (%) | Angle de diffraction $2\theta/°$ [Cu K(alpha 1)] |
   |---|---|
   | 100 | 8,0 à 8,4 |
   | 11 à 21 | 11,0 à 11,4 |
   | 13 à 23 | 13,2 à 13,6 |
   | 5 à 15 | 18,0 à 18,4 |
   | 7 à 17 | 18,4 à 18,8 |
   | 19 à 29 | 19,9 à 20,0 |

   l'indication 100 % se rapportant à l'intensité du pic le plus haut dans le diffractogramme de rayons X.

2. Silicate stratifié selon la revendication 1, **caractérisé en ce qu'**en (1), le silicate stratifié est ajouté en une quantité de 0,1 à 5 % en poids, par rapport au dioxyde de silicium et/ou au dioxyde de silicium contenu dans le précurseur de dioxyde de silicium.

3. Silicate stratifié selon la revendication 1 ou 2, **caractérisé en ce que** le mélange produit selon (1) est concentré avant le chauffage selon (2).

4. Silicate stratifié selon l'une quelconque des revendications 1 à 3, **caractérisé en ce que** l'au moins un composé de type tétraalkylammonium comprenant $R_1R_2R_3R_4N^+$ contient un anion basique, préférablement un ion hydroxyde.

5. Silicate stratifié selon l'une quelconque des revendications 1 à 4, **caractérisé en ce que** la solution aqueuse utilisée selon (1) contient de l'hydroxyde de diméthyldipropylammonium (DMDPAH).

6. Silicate stratifié selon l'une quelconque des revendications 1 à 5, **caractérisé en ce que** la solution colloïdale obtenue selon (1) contient du $SiO_2$, du DMDPAH et de l'eau en les rapports en poids $SiO_2$ : DMDPAH : eau dans la plage de 1 : (0,4 à 10) : (4 à 12).

7. Silicate stratifié selon l'une quelconque des revendications 1 à 6, **caractérisé en ce que** la solution colloïdale obtenue selon (1) contient du $SiO_2$, du DMDPAH et de l'eau en les rapports en poids $SiO_2$ : DMDPAH : eau égaux à 1 : (0,4 à 2) : (4 à 8) .

8. Silicate stratifié selon l'une quelconque des revendications 1 à 6, **caractérisé en ce que** la solution colloïdale obtenue selon (1) contient du $SiO_2$, du DMDPAH et de l'eau en les rapports en poids $SiO_2$ : DMDPAH : eau égaux à 1 : (0,45 à 0,55) : (8 à 12).

9. Silicate stratifié selon l'une quelconque des revendications 1 à 8, **caractérisé en ce que** la solution colloïdale obtenue selon (1), éventuellement après concentration comme défini dans la revendication 3, est chauffée dans un autoclave à une température de 100 à 180 °C.

10. Silicate stratifié selon l'une quelconque des revendications 1 à 9, **caractérisé en ce que** selon (1), du dioxyde de silicium amorphe est utilisé.

11. Silicate stratifié selon l'une quelconque des revendications 1 à 10, dans lequel selon (1), une source d'aluminium, une source de bore, une source de fer, une source de titane, une source d'étain, une source de germanium, une sorte de zirconium, une source de vanadium et/ou une source de niobium est de plus utilisée.

12. Silicate stratifié selon l'une quelconque des revendications 1 à 11, comprenant de plus (3) la séparation de l'au moins un silicate stratifié à partir de la suspension obtenue selon (2).

13. Silicate stratifié selon la revendication 12, comprenant de plus

(4) le lavage et/ou
(5) le séchage du silicate stratifié obtenu selon (3) .

14. Silicate stratifié selon la revendication 13, le silicate stratifié étant lavé selon (4) avec de l'eau et/ou étant séché selon (5) à une température dans la plage de la température ambiante jusqu'à 150 °C.

15. Tectosilicate pouvant être obtenu par un procédé comprenant

(1) le mélange de dioxyde de silicium et/ou d'un précurseur de dioxyde de silicium avec une solution aqueuse, contenant au moins un composé de type tétraalkylammonium comprenant $R_1R_2R_3R_4N^+$ et au moins une base, $R_1$ et $R_2$ étant méthyle et aussi bien $R_3$ qu'également $R_4$ étant n-propyle ;
(2) le chauffage de la solution colloïdale obtenue en (1) à une température dans une plage allant de supérieure à la température d'ébullition présente à la pression choisie de la solution colloïdale jusqu'à 180 °C à pression normale avec obtention d'une suspension contenant au moins un silicate stratifié,

**caractérisé en ce qu'**en tant qu'auxiliaire de cristallisation en (1), le silicate stratifié contenant au moins du silicium et de l'oxygène, obtenu après la séparation de la suspension obtenue selon (2), est ajouté, la solution colloïdale obtenue selon (1) étant chauffée selon (2) pour une durée dans une plage de 12 h à 260 h, et comprenant de plus
(6) la calcination du silicate stratifié obtenu selon (2) avec obtention d'un tectosilicate, le tectosilicate stratifié contenant au moins les réflexions suivantes :

| intensité (%) | Angle de diffraction $2\theta/°$ [Cu K(alpha 1)] |
|---|---|
| 100 | 9,8 à 10,2 |
| 24 à 34 | 11,0 à 11,4 |
| 9 à 19 | 15,5 à 15,9 |
| 12 à 22 | 19,4 à 19,6 |
| 12 à 22 | 19,6 à 19,8 |

l'indication 100 % se rapportant à l'intensité du pic le plus haut dans le diffractogramme de rayons X.

16. Tectosilicate selon la revendication 15, **caractérisé en ce que** la calcination est réalisée à une température dans la plage de 300 à 600 °C.

17. Corps moulé, contenant au moins un tectosilicate selon la revendication 15.

18. Procédé de préparation d'un corps moulé, comprenant

(I) la préparation d'un mélange, contenant un tectosilicate, comme défini dans la revendication 15, et au moins un liant ;
(II) le malaxage du mélange ;

(III) le moulage du mélange malaxé avec obtention d'au moins un corps moulé ;

(IV) le séchage de l'au moins un corps moulé ;

(V) la calcination de l'au moins un corps moulé séché.

**19.** Utilisation d'un tectosilicate selon la revendication 15 ou 16 ou d'un corps moulé selon la revendication 17 pour la séparation de trans-2-oléfines et de 1-oléfines, préférablement de trans-2-butène et de 1-butène, en phase liquide en utilisant un alcane en tant que solvant, préférablement en utilisant du cyclohexane en tant que solvant.

FIG..1

FIG..2

FIG..3

FIG..4

FIG..5

FIG..6

FIG..7

FIG..8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005100242 A1
- WO 9855228 A
- DE 19723949 A1

**In der Beschreibung aufgeführte Nicht-Patentliteratur**

- **CH. BAERLOCHER ; W.M. MEIER ; D.H. OLSON.** Atlas of Zeolite Framework Types. Elsevier, 2001, 10-15
- Ullmann's Enzyklopädie der Technischen Chemie. 1972, vol. 2, 295
- **D.W. BRECK.** Zeolite Molecular Sieves. J. Wiley, 1974, 634-641